# EUROPÄISCHE PATENTSCHRIFT

(11) **EP 3 419 866 B1**
(45) Veröffentlichungstag und Bekanntmachung des Hinweises auf die Patenterteilung: **01.12.2021**
(21) Anmeldenummer: 17705419.4
(22) Anmeldetag: 16.02.2017
(51) Int. Cl.: B60R 25/24

(54) **VERFAHREN FÜR EINE AKTIVIERUNG MINDESTENS EINER SICHERHEITSFUNKTION EINES SICHERHEITSSYSTEMS EINES FAHRZEUGES**
METHOD FOR ACTIVATING AT LEAST ONE SAFETY FUNCTION OF A VEHICLE SAFETY SYSTEM
PROCÉDÉ POUR ACTIVER AU MOINS UNE FONCTION DE SÉCURITÉ D'UN SYSTÈME DE SÉCURITÉ D'UN VÉHICULE

(30) Priorität: 26.02.2016 DE 102016103476
(43) Veröffentlichungstag der Anmeldung: 02.01.2019
(73) Patentinhaber: HUF Hülsbeck & Fürst GmbH & Co. KG, 42551 Velbert (DE)
(72) Erfinder: BREER, Jan, 45259 Essen (DE); FELDSIEPER, Marc, 45529 Hattingen (DE); IHLN, Matthias, 40223 Düsseldorf (DE); NEUHOFF, Stefan, 45329 Essen (DE); SCHINDLER, Mirko, 42549 Velbert (DE); SKALETZ, Thomas, 40668 Meerbusch (DE); ZILLER, Boris, 40885 Ratingen (DE)
(74) Vertreter: Bals, Rüdiger
(86) Internationale Anmeldenummer: PCT/EP2017/053532
(87) Internationale Veröffentlichungsnummer: WO 2017/144346

(56) Entgegenhaltungen:
- EP-A1- 0 892 134
- DE-A1- 10 064 141
- DE-A1- 10 334 625
- DE-A1-102013 220 240
- DE-B3-102005 032 402
- DE-U1-202005 020 140

## Beschreibung

Die vorliegende Erfindung betrifft ein Verfahren für eine Aktivierung mindestens einer Sicherheitsfunktion eines Sicherheitssystems eines Fahrzeuges nach dem Oberbegriff von Anspruch 1. Ferner bezieht sich die Erfindung auf ein Sicherheitssystem nach dem Oberbegriff von Anspruch 13 sowie auf einen mobilen Identifikationsgeber nach dem Oberbegriff von Anspruch 14.

Die Schrift DE 103 34 625 A1 offenbart ein herkömmliches Verfahren bzw. Sicherheitssystem.

Mobile Identifikationsgeber (ID-Geber) werden als elektronische Schlüssel eingesetzt, um als Alternative zum mechanischen Schlüssel eine Entriegelung eines Sicherheitssystems eines Fahrzeuges zu ermöglichen. Weiter können ID-Geber noch für zahlreiche weitere Aufgaben bei Fahrzeugen zum Einsatz kommen, um den Bedienerkomfort und die Sicherheit zu erhöhen. Üblicherweise werden zur Kommunikation des ID-Gebers mit dem Fahrzeug (bzw. mit dem Sicherheitssystem des Fahrzeuges) Infrarotsysteme oder Funksysteme im Niederfrequenzbereich eingesetzt. Dadurch lassen sich Authentifizierungsdaten kontaktlos (drahtlos) übertragen und so bspw. die Zugangsdaten prüfen, um eine Entriegelung bei positiver Authentifizierung zu ermöglichen.

Die Authentifizierung kann bspw. durch einen Benutzer des Fahrzeuges mittels Knopfdruck initiiert werden. Durch diese aktive Betätigung des Identifikationsgebers durch den Benutzer wird das Signal mit den Authentifizierungsinformationen, z. B. mit Zugangsdaten, wie einem Code, an eine fahrzeugseitige Elektronik des Sicherheitssystems versendet. Solche Systeme werden auch als Active-Keyless-Entry-Systeme bezeichnet (wenn z. B. ein Knopf aktiv gedrückt werden muss). Neben den Active-Keyless-Entry-System werden zunehmend auch Sicherheitssysteme mit der sogenannten Passive-Keyless-Entry- oder Keyless-Go-Funktionalität verwendet. Im Gegensatz zur konventionellen Fernbedienung ist bei der Passive-Keyless-Entry-Funktionalität keine aktive Bedienung des ID-Gebers (gemeint ist ohne Knopfdruck) durch den Benutzer notwendig. Bspw. bei Annäherung des Benutzers oder bei Betätigung eines Türgriffs kann ein Wecksignal vom Fahrzeug über eine Funkverbindung, insbesondere über eine LF (Low Frequency/Niederfrequenz)-Funkverbindung, zum Identifikationsgeber übertragen werden. Daraufhin wird der ID-Geber geweckt und sendet ein Funksignal mit dem Code zur Authentifizierung an das Sicherheitssystem des Fahrzeuges.

Es hat es sich als Nachteil herausgestellt, dass bei derartigen Systemen, insbesondere bei Keyless-Go Systemen, aufwendige Sicherheitsmechanismen implementiert werden müssen, um das Fahrzeug vor Manipulation und Diebstahl zu schützen. Bspw. müssen Vorkehrungen getroffen werden, um zu verhindern, dass über einen sogenannten "Relay-Station-Attack" Angriff unbefugt eine Sicherheitsfunktion des Fahrzeuges, wie die Entriegelung und/oder der Motorstart des Fahrzeuges, aktiviert wird. Hierzu sind komplexe und kostenaufwendige Maßnahmen notwendig, welche es bspw. ermöglichen, einen tatsächlichen Abstand zwischen dem ID-Geber und dem Fahrzeug zu bestimmen. Eine Ermittlung und Auswertung derartiger Abstandsinformationen ist allerdings häufig zu ungenau, unzuverlässig und/oder manipulierbar.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine kostengünstige, sicherere und/oder zuverlässigere Aktivierung von Sicherheitsfunktionen eines Fahrzeuges zu ermöglichen. Insbesondere soll die Genauigkeit und/oder Sicherheit bei der Abstandsermittlung und/oder Auswertung der Abstandsinformation erhöht werden.

Die voranstehende Aufgabe wird gelöst durch ein Verfahren mit den Merkmalen des Anspruchs 1, durch ein Sicherheitssystem mit den Merkmalen des Anspruchs 13 sowie durch einen mobilen Identifikationsgeber mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen mobilen Identifikationsgeber sowie dem erfindungsgemäßen Sicherheitssystem, und jeweils umgekehrt, so dass bezüglich der Offenbarung zu den einzelnen Erfindungsaspekten stets wechselseitig Bezug genommen wird bzw. werden kann.

Die Aufgabe wird bevorzugt gelöst durch ein Verfahren für ein Sicherheitssystem eines Fahrzeuges, insbesondere für eine, vorzugsweise schlüssellose und/oder Passive-Keyless-Entry- und/oder Keyless-Go-, Aktivierung mindestens einer Sicherheitsfunktion des, bevorzugt schlüssellosen und/oder Passive-Keyless-Entry- und/oder Keyless-Go-, Sicherheitssystems des Fahrzeuges. Hierbei ist insbesondere vorgesehen, dass die nachfolgenden Schritte durchgeführt werden, z. B. zeitlich nacheinander oder in beliebiger Reihenfolge:
- Überwachen einer Annäherung eines mobilen Identifikationsgebers (300) an das Fahrzeug,
- Initiieren zumindest einer (z. B. ersten und/oder zweiten) Abstandsermittlung, insbesondere (nur) dann, wenn die Annäherung detektiert wird,
- Durchführen der Abstandsermittlung, wobei zumindest eine Abstandsinformation über einen Abstand (z. B. Entfernung) des Identifikationsgebers zum Fahrzeug dadurch bestimmt wird, dass zumindest eine Kommunikation, insbesondere FuncKommunikation, zwischen einer Sende-Empfangsvorrichtung des Identifikationsgebers und einer Kommunikationsvorrichtung des Fahrzeuges ausgewertet wird,
- Auswerten der Abstandsinformation durch eine Verarbeitungsvorrichtung des Fahrzeuges, wodurch eine Lokalisierung des Identifikationsgebers relativ zu mindestens einer (z. B. ersten und/oder zweiten) Sicherheitszone erfolgt,
wobei eine Sicherheitsinformation für das Sicherheitssystem (200) in Abhängigkeit von der Lokalisierung bestimmt wird. Mit anderen Worten wird eine Abstandsermittlung und/oder die Lokalisierung genutzt, um die Sicherheit bei der Authentifizierung zu erhöhen. Insbesondere wird hierbei zumindest eine Kommunikation genutzt, wobei z. B. auch eine erste und eine zweite Kommunikation über jeweils unterschiedliche Kommunikationsarten unterstützend eingesetzt werden, und bspw. jeweils in Abhängigkeit von einer ersten und zweiten Sicherheitszone aktiviert werden. Bevorzugt erfolgt bei der Abstandsermittlung und/oder bei der Lokalisierung die Ermittlung des Abstands als eine Ermittlung einer konkreten Entfernung, z. B. durch eine Laufzeitanalyse eines Kommunikationssignals der Kommunikation und/oder auf Grundlage von Eigenschaften des Kommunikationssignals, welche sich in Abhängigkeit von der Entfernung verändern.

Bevorzugt erfolgt das Bestimmen der zumindest einen Abstandsinformation über den Abstand des mobilen Identifikationsgebers zu dem Fahrzeug durch die Abstandsermittlung anhand zumindest einen, vorzugsweise breitbandigen, Kommunikationssignals der Kommunikation derart, dass die Signallaufzeit mindestens eines ersten oder eines zweiten oder eines dritten oder weiterer, vorzugsweise breitbandiger, Kommunikationssignale ausgewertet wird, bevorzugt durch eine "Time-of-Flight"-Analyse und/oder durch eine "Ping"-Analyse des mindestens einen Kommunikationssignals. Die Ping-Analyse umfasst dabei z. B. das Aussenden ein oder mehrerer Abstandsermittlungssignale (z. B. Informationen, welche über die Kommunikation bzw. das Kommunikationssignal übertragen werden), wie z. B. Datenpakete, welche vom Sender (z. B. dem Fahrzeug oder alternativ dem ID-Geber) ausgesendet werden. Insbesondere werden die Datenpakete anschließend vom Empfänger (z. B. dem ID-Geber oder alternativ dem Fahrzeug) empfangen und/oder zurückgesendet werden und/oder es wird ein Antwortsignal (mit einer Antwortinformation) zurückgesendet. Die zurückgesendete Information (z. B. das Datenpaket oder die Antwortinformation) und/oder die Zeitdauer bis zum Empfang dieser Information wird dann vom Sender zur Ermittlung der Signallaufzeit bzw. zur Abstandsermittlung ausgewertet.

Besonders bevorzugt erfolgt zur Abstandsermittlung eine Funkstreckenmessung durch Ultrabreitband (UWB), bzw. des Kommunikationssignals als UWB-Kommunikationssignal, um so z. B. eine Funkstreckenverlängerung eines LF-Signals zu verhindern. Anhand der Abstandsermittlung kann z. B. festgestellt werden, ob eine Manipulation der Funkstrecke zwischen dem ID-Geber und dem Fahrzeug bzw. dem Empfänger des Fahrzeuges (wie einer Erfassungsvorrichtung und/oder einer Kommunikationsvorrichtung und/oder einer Kommunikationseinheit) stattgefunden hat. Insbesondere erfolgt nur dann eine Authentifizierung und/oder Bestimmung einer (positiven) Sicherheitsinformation zur Freigabe der Aktivierung der Sicherheitsfunktion, wenn die Antwortzeit kurz genug ist, ist sichergestellt, dass keine Funkstreckenverlängerung stattgefunden hat. Die Auswertung der Antwortzeit entspricht dann in diesem Fall der Lokalisierung. Die Antwortzeiten liegen dabei z. B. im Nanosekunden-Bereich, z. B. in einem Bereich von 1 ns bis 1000 ns, vorzugsweise 100 ns bis 100 ns und/oder werden derart gewählt, dass der ID-Geber in einem Sicherheitsabstand von max. 1m oder max. 2m oder max. 6m oder max. 10m oder von max. 100 m Fahrzeug entfernt sein muss (d. h. z. B. innerhalb einer ersten oder zweiten Sicherheitszone sich befinden muss).

Die Sicherheitsinformation ist bspw. eine Information für das Sicherheitssystem, welche die Aktivierung der Sicherheitsfunktion freigibt, z. B. das Entriegeln des Fahrzeuges. Dies hat den Vorteil, dass ein Manipulationsversuch am Authentifizierungsvorgang, z. B. eine Authentifizierung über eine Verstärkung des Authentifizierungssignals über eine zu lange Wegstrecke, durch die Lokalisierung erkannt und verhindert werden kann. Insbesondere kann hierzu direkt die Kommunikation mit dem ID-Geber zur Lokalisierung genutzt werden (anstatt über externe Systeme wie GPS zu lokalisieren), wodurch die Komplexität und die Kosten für die Implementierung der Lokalisierung verringert werden können. Die Kommunikation erfolgt dabei z. B. als erste und/oder zweite Kommunikation und/oder zwischen einer Sende-Empfangsvorrichtung des ID-Gebers und einer Erfassungs- und/oder Kommunikationsvorrichtung des Fahrzeuges, wobei die Erfassungsvorrichtung z. B. die Kommunikationsvorrichtung umfasst. Bevorzugt ist die Erfassungsvorrichtung und/oder die Kommunikationsvorrichtung als eine Funk-Kommunikationsvorrichtung zur Funkkommunikation ausgebildet.

Vorteilhafterweise kann es vorgesehen sein, dass die Aktivierung der Sicherheitsfunktion in Abhängigkeit von einer Sicherheitsinformation erfolgt, welche z. B. in Abhängigkeit von der Abstandsinformation ermittelt wird. Z. B. umfasst dabei die Sicherheitsinformation eine Information, ob sich der ID-Geber innerhalb einer Sicherheitszone um das Fahrzeug befindet und/oder ein maximaler Abstand zwischen dem Fahrzeug und dem ID-Geber nicht überschritten wird. Bevorzugt erfolgt die Aktivierung der Sicherheitsfunktion nur dann, wenn sich der ID-Geber innerhalb dieser (z. B. ersten und/oder zweiten) Sicherheitszone befindet und/oder weitere Bedingungen vorliegen, wie z. B. die positive Überprüfung eines Authentifizierungscodes oder dergleichen. Die Sicherheitszone erstreckt sich dabei bspw. um das Fahrzeug, insbesondere mit einem bestimmten maximalen Radius (ausgehend vom Fahrzeug). Dies ermöglicht eine Verbesserung der Sicherheit bei der Authentifizierung, insbesondere bei einer Nutzung einer schlüssellosen Aktivierung. Die schlüssellose Aktivierung der Sicherheitsfunktion bezieht sich bevorzugt darauf, dass das Fahrzeug ohne aktive Benutzung eines ID-Gebers (z. B. Autoschlüssels) entriegelt und/oder durch das bloße Betätigen des Startknopfes gestartet werden kann. Eine solche schlüssellose Aktivierung ist bspw. durch die so genannte Passive-Entry/Passive-Start (PEPS)-Funktionalität umfasst.

Vorzugsweise ist die Bestimmung der Sicherheitsinformation, bevorzugt der Information über die erfolgreiche Lokalisierung innerhalb der Sicherheitszone, neben der erfolgreichen Authentifizierung durch den ID-Geber eine weitere Voraussetzung für Sicherheitsfunktionen, welche die Authentifizierung voraussetzen. Die Sicherheitsfunktion ist z. B. eine Funktion, welche einen Motorstart und/oder das Entriegeln, z. B. einer Zentralverriegelung, des Fahrzeuges bewirkt und/oder freigibt. Zum Entriegeln wird z. B. eine Schließvorrichtung des Fahrzeuges angesteuert.

Das erfindungsgemäße Verfahren dient bevorzugt zur schlüssellosen Aktivierung der mindestens einen Sicherheitsfunktion des Sicherheitssystems, insbesondere eines Zugangssystems, des Fahrzeuges, vorzugsweise eines Kraftfahrzeuges und/oder Personenkraftfahrzeuges und/oder Lastkraftfahrzeuges und/oder Elektrofahrzeuges und/oder Hybridfahrzeuges.

Vorteilhaft ist es zudem, wenn die erste und/oder zweite Kommunikation zwischen dem Identifikationsgeber und dem Fahrzeug verschlüsselt und/oder fälschungssicher durchgeführt wird, wobei bevorzugt die durch die Kommunikation übertragenen Daten und/oder die Abstandsinformation verschlüsselt werden. Bevorzugt erfolgt neben einer Verschlüsselung und/oder fälschungssicheren Kommunikation eine weitere Kodierung der Daten und/oder Abstandsinformation. Es wird vorzugsweise unter der "Verschlüsselung" z. B. der Daten und/oder "fälschungssicheren" Kommunikation insbesondere eine Sicherheitsfunktion zur Verhinderung einer bewussten Manipulation der Übertragung bzw. Daten verstanden. Damit erfolgt insbesondere eine Abgrenzung der "Verschlüsselung" und "Fälschungssicherheit" zu anderen Kodierungs- und/oder Kontroll- und/oder Fehlerkorrekturverfahren zur Verhinderung und/oder Erkennung einer fehlerhaften Übertragung (aufgrund von Übertragungsfehlern, wie z. B. Rauschen). Vorzugsweise erfolgt auch eine Abgrenzung zu Kodierungen, welche (z. B. ausschließlich) zur Ermöglichung der Datenübertragung eingesetzt werden (Zeichenkodierung, Multiplexing, Spreizcodes usw.), insbesondere sofern diese nur zur Übertragung und nicht zum Schutz vor Manipulationen eingesetzt werden. Unter einer bewussten Manipulation wird dabei insbesondere die durch eine Person herbeigeführte unbefugte bewusste Veränderung der Datenübertragung verstanden.

Es ist ferner denkbar, dass die Überwachung zumindest den nachfolgenden Schritt umfasst:
- Aussenden eines Initiierungssignals, z. B. eines LF- (Low frequency) oder HF- (High frequency) Signals, insbesondere zyklisch und/oder bei einer detektierten Annäherung (z. B. durch einen kapazitiven Sensor eines Türgriffes des Fahrzeuges), bevorzugt durch LF- oder HF-Polling.

Alternativ oder zusätzlich kann es vorgesehen sein, dass das Überwachen die Auswertung (z. B. der Messdaten) eines Sensors des Fahrzeuges und/oder eines Türgriffes zur Detektion einer Annäherung umfasst, z. B. die Auswertung mindestens eines Annäherungssensors, wie eines kapazitiven Sensors und/oder eines Kamerasensors. Auch kann die Annäherung z. B. dadurch detektiert werden, dass eine Kommunikation in einem Kommunikationsfeld festgestellt wird, wobei das Kommunikationsfeld durch die Kommunikationsvorrichtung des Fahrzeuges um das Fahrzeug erzeugt wird. Die Abstandsermittlung und/oder Authentifizierung kann dann z. B. automatisch, durch die Detektion der Annäherung, ausgelöst werden und/oder manuell (z. B. durch Knopfdruck) ausgelöst werden. Als Bedingung zur Auslösung (zum Initiieren) der Abstandsermittlung kann z. B. neben der detektierten Annäherung ein weitere Ergebnis sein (wie z. B. das manuelle Betätigen des ID-Gebers oder eine erfolgreiche Plausibilisierung). Weiter kann es vorgesehen sein, dass, z. B. um die Annäherung zu detektieren, das Initiierungssignal (z. B. als Wecksignal) durch den ID-Geber empfangen und/oder ausgewertet und/oder als Reaktion auf den Empfang ein Abfragesignal und/oder Antwortsignal an das Fahrzeug zurückgesendet wird. Das Abfragesignal bzw. Antwortsignal wird z. B. über dieselbe Kommunikationsart ausgesendet, mit welcher das Initiierungssignal durch den ID-Geber empfangen wurde (z. B. LF oder HF). Alternativ oder zusätzlich wird das Abfragesignal und/oder Antwortsignal oder ein weiteres Antwortsignal oder ein weiteres Abfragesignal durch den ID-Geber über UWB ausgesendet. Es ist also auch denkbar, dass als Reaktion auf den Empfang des Initiierungssignals durch den ID-Geber durch den ID-Geber sowohl ein Antwortsignal (z. B. über LF oder HF, insbesondere zur Plausibilisierung) und gleichzeitig oder verzögert ein Abfragesignal (z. B. über UWB, z. B. zur Abstandsermittlung) ausgesendet wird. Anschließend erfolgt insbesondere ein Empfangen des Abfragesignals und/oder Antwortsignals durch die Kommunikationsvorrichtung des Fahrzeuges. Das Initiierungssignal umfasst vorzugsweise Informationen, wie Daten, z. B. über das Fahrzeug und/oder das Sicherheitssystem und/oder eine Information über die Authentifizierungsmethode, welche durch den ID-Geber auswertbar sind. Ferner ist es auch möglich, dass das Initiierungssignal erst dann ausgesendet wird, wenn die Annäherung detektiert wurde, d. h. bspw. bei Erfassung einer Ausgabe eines entsprechenden Signals eines Annäherungssensors.

Die Kommunikationsart (Kommunikationstechnologie) LF bezeichnet insbesondere eine Übertragung von Signalen im Langwellen-Frequenzbereich, z. B. im Frequenzbereich von 0,148 ― 0,283 MHz und/oder in einem Bereich von 20 kHz und/oder 125 ― 130 kHz. Die Kommunikationsart HF bezeichnet insbesondere eine Übertragung von Signalen im Kurzwellen-Frequenzbereich, z. B. im Frequenzbereich von 3,95 ― 26,10 MHz. Die Kommunikationsart Bluetooth bezeichnet insbesondere eine Übertragung von Signalen im Frequenzbereich von bzw. im Bereich um ca. 2,4 GHz. Die Datenübertragungsrate beträgt z. B. -max. 721 kBit/s. Ferner kann die Bluetooth Kommunikationsart auch als Bluetooth Low Energy (auch: Bluetooth Smart) ausgeführt sein.

Insbesondere wird im Rahmen der Erfindung unter Bluetooth auch Bluetooth Low Energy verstanden.

Bspw. kann die Überwachung derart erfolgen, dass zunächst die Überwachung erfolgt, und die Annäherung detektiert wird, wenn das Initiierungssignal durch den ID-Geber durch Aussenden eines Abfragesignals und/oder Antwortsignals beantwortet wird. Anhand des empfangenen Antwortsignals kann bspw. bereits die Abstandsermittlung durchgeführt werden, da die Kommunikation (Aussenden des Initiierungssignals, insbesondere als das Abfragesignal, und Aussenden des Antwortsignals) zwischen der Kommunikationsvorrichtung des Fahrzeuges und der Sende-Empfangsvorrichtung des ID-Gebers z. B. über eine gleiche Kommunikationsart (wie UWB) erfolgen kann.

Gemäß einem weiteren Vorteil kann vorgesehen sein, dass die Überwachung erst dann durchgeführt wird, wenn zuvor eine Annäherung des ID-Gebers detektiert wird, und insbesondere dass der ID-Geber in ein LF und/oder HF (Kommunikations-) Feld eingetreten ist, z. B. in einer erste und/oder zweite Sicherheitszone, welches durch das Fahrzeug z. B. zyklisch erzeugt. Insbesondere ist es denkbar, dass eine Schnittstelle mit hohem Energieverbrauch, wie eine UWB-Schnittstelle, z. B. eine erste oder zweite Kommunikationseinheit und/oder erste oder zweite Sende-Empfangseinheit) erst dann aktiviert wird, wenn die Annäherung detektiert wurde und/oder der ID-Geber in der ersten oder zweiten Sicherheitszone detektiert wird. Dies ermöglicht es, z. B. die Akkulaufzeit des ID-Gebers deutlich zu erhöhen.

Auch ist es denkbar, dass anhand des (durch das Fahrzeug oder durch den ID-Geber) empfangenen Abfragesignals bzw. Antwortsignals eine Plausibilisierung durchgeführt wird (z. B. kann durch die Auswertung der Abstandsinformation ermittelt werden, ob sich der ID-Geber innerhalb der Sicherheitszone befindet, um eine Manipulation der Authentifizierung auszuschließen). Die Plausibilisierung kann z. B. durch die Abstandsermittlung und/oder die Auswertung einer Authentifizierungsinformation und/oder durch die Auswertung einer Signaleigenschaften, wie Signalstärke, durchgeführt werden, wobei die Authentifizierungsinformation z. B. vom ID-Geber über das Abfragesignal bzw. Antwortsignal übertragen wird. Anschließend ist es denkbar, dass zur Abstandsermittlung das Fahrzeug (z. B. die Kommunikationsvorrichtung) und/oder der ID-Geber als Sender ein Abfragesignal und/oder Antwortsignal z. B. über UWB aussendet.

Die Abstandsermittlung erfolgt bevorzugt durch eine Laufzeitanalyse. Hierbei ist es zur Abstandsermittlung z. B. notwendig, dass zur Ermittlung der Signallaufzeit ein Abfragesignal (insbesondere mit einer Abfrageinformation) über die Kommunikation durch den Sender ausgesendet und durch den Empfänger empfangen, und anschließend ein weiteres Signal, z. B. das Antwortsignal (insbesondere mit einer Antwortinformation), von dem Empfänger des Abfragesignals ausgesendet und durch den Sender des Abfragesignals empfangen wird. Anhand der zeitlichen Dauer zwischen dem Aussenden des Abfragesignals (Ping) und dem Empfangen des weiteren Signals bzw. Antwortsignals (Pong) lässt sich die Signallaufzeit bestimmen. Insbesondere werden die Abfrage- und/oder Antwort- und/oder weiteren Signale über UWB übertragen, wobei die Informationen und/oder Daten der Kommunikation bevorzugt verschlüsselt übertragen werden. Bevorzugt werden sämtliche über HF und/oder LF und/oder UWB und/oder über die Kommunikation übertragenen Daten verschlüsselt übertragen.

Besonders bevorzugt wird zur Kommunikation eine erste Kommunikation, insbesondere UWB, zusätzlich zur zweiten Kommunikation, insbesondere HF- und/oder LF- und/oder Bluetooth-Kommunikation, eingesetzt, wobei vorzugsweise die erste Kommunikation und die zweite Kommunikation gleichzeitig erfolgen können. Insbesondere kann es vorgesehen sein, dass zunächst (z. B. bei Lokalisierung des ID-Gebers in einer ersten Sicherheitszone) nur die zweite Kommunikation und erst bei weiterer Annäherung des ID-Gebers (z. B. bei Lokalisierung in der zweiten Sicherheitszone) die erste Kommunikation aktiviert wird. Die erste Kommunikation kann dabei die zweite Kommunikation unterstützen und/oder vollständig oder zumindest teilweise ersetzen, z. B. in Bezug auf die Authentifizierung und/oder Abstandsermittlung, sodass z. B. durch den Einsatz von UWB die Sicherheit erhöht werden kann, und der Energieverbrauch durch das Umschalten zwischen der ersten und zweiten Kommunikation optimiert werden.

Auch ist es denkbar, dass zur weiteren Erhöhung der Sicherheit die Abstandsermittlung zur Plausibilisierung mehrfach durchgeführt wird, bevor eine Authentifizierung erfolgt. Die Abstandsermittlungssignale (d. h. das Abfragesignal und das daraufhin ausgesendete Antwortsignal, also Ping und Pong) werden hierzu mehrfach, d. h. mindestens zweimal, und insbesondere mindestens dreimal oder viermal, zwischen Fahrzeug und ID-Geber übertragen werden, bevor eine Authentifizierung durchgeführt wird.

Bevorzugt kann es vorgesehen sein, dass zur Abstandsermittlung die Abstandsermittlungssignale über UWB und zur Authentifizierung die Authentifizierungsdaten über LF- und/oder HF- und/oder eine sonstige Funkverbindung zwischen ID-Geber und Fahrzeug übertragen werden, welche sich von UWB unterscheidet. Damit können z. B. kostengünstig bestehende Authentifizierungssysteme des Fahrzeuges genutzt werden, und gleichzeitig die Sicherheit durch eine hochgenaue Abstandsermittlung und Lokalisierung des ID-Gebers mittels UWB erhöht werden. Die Genauigkeit und/oder Auflösung der Lokalisierung mittels UWB beträgt z. B. mindestens 1 cm oder mindestens 4 cm oder mindestens 10 cm oder mindestens 20 cm.

Vorteilhafterweise kann es im Rahmen der Erfindung vorgesehen sein, dass die UWB-Kommunikation und/oder die erste Kommunikation erst dann aktiviert wird, wenn zuvor eine Plausibilisierung anhand der Kommunikationssignale der zweiten Kommunikation (z. B. HF oder LF) erfolgreich stattgefunden hat. Die erfolgreiche Plausibilisierung umfasst z. B. einen Datenaustausch und/oder den Austausch von Authentifizierungsinformationen und/oder eine erste Abstandsermittlung durch Auswertung der zweiten Kommunikation. Anschließend kann z. B., falls die Plausibilisierung erfolgreich war (z. B. bei Lokalisierung des ID-Gebers in der ersten oder zweiten Sicherheitszone), die erste Kommunikation aktiviert werden und/oder auch eine zweite Abstandsermittlung (z. B. genauer durch Auswertung der ersten Kommunikation, wie UWB) erfolgen. Insbesondere ist die erste Kommunikation energieintensiver als die zweite Kommunikation. Dies hat den Vorteil, dass die sicherere aber sehr energieintensive erste Kommunikation erst dann eingeschaltet werden muss, wenn bereits eine Plausibilisierung anhand der zweiten Kommunikation erfolgen konnte.

Besonders vorteilhaft kann es im Rahmen der Erfindung sein, wenn eine Übertragung von Authentifizierungsinformationen, wie Authentifizierungscodes, zur Aktivierung der Sicherheitsfunktion und/oder Bestimmung der Sicherheitsinformation über die erste Kommunikation, insbesondere UWB, oder sowohl über die erste als auch die zweite Kommunikation übertragen werden. Auch kann bspw. eine Störungserfassungsvorrichtung des ID-Gebers und/oder des Fahrzeuges vorgesehen sein, und bei Erfassung einer Störung der zweiten Kommunikation die Übertragung der Authentifizierungsinformationen (anstatt über die zweite Kommunikation) über die erste Kommunikation (z. B. UWB) initiieren. Eine derartige Störung liegt z. B. vor, wenn das Fahrzeug als ein Elektrofahrzeug über einen Induktionsladevorgang aufgeladen wird, sodass bspw. die LF-Kommunikation gestört wird.

Weiter ist es denkbar, dass nach dem Aussenden des Abfragesignals über eine erste Kommunikationseinheit und/oder erste Sende-Empfangseinheit die erste Kommunikationseinheit und/oder erste Sende-Empfangseinheit nach einer bestimmten Zeitdauer abgeschaltet wird, falls innerhalb dieser Zeitdauer ein Empfang eines entsprechenden Antwortsignals (z. B. zur Bestimmung der Signallaufzeit) ausbleibt. Hierdurch ist eine weitere Energieersparnis möglich. Diese Zeitdauer beträgt z. B. maximal 1 ms oder maximal 10 ms oder maximal 100 ms oder maximal 1 s oder maximal 5 s und/oder ist einstellbar ausgeführt.

Selbstverständlich gelten im Rahmen der Erfindung Merkmale, welche in Bezug auf die erste Kommunikation beschrieben wurden, auch im Zusammenhang mit der zweiten oder einer weiteren Kommunikation, und jeweils umgekehrt. Daher kann bspw. auch die zweite Kommunikation als die UWB-Kommunikation, und die erste Kommunikation als die HF- oder LF- oder Bluetooth Kommunikation ausgeführt sein.

Ferner kann im Rahmen der Erfindung vorgesehen sein, dass zur Abstandsermittlung gemäß Schritt a) eine Laufzeitanalyse durchgeführt wird, wobei zumindest einer der nachfolgenden Schritte vorgesehen ist:
- Aussenden eines Abfragesignals und/oder einer Abfrageinformation über die Kommunikation, insbesondere über das Kommunikationssignal, z. B. über UWB, bevorzugt durch eine Kommunikationsvorrichtung des Fahrzeuges, insbesondere durch eine erste Kommunikationseinheit der Kommunikationsvorrichtung oder durch eine Sende-Empfangsvorrichtung, vorzugsweise durch eine erste Sende-Empfangseinheit, des ID-Gebers,
- Empfangen des Abfragesignals und/oder der Abfrageinformation, bevorzugt durch eine Sende-Empfangsvorrichtung des Identifikationsgeber oder durch die Kommunikationsvorrichtung des Fahrzeuges,
- Aussenden eines Antwortsignals und/oder einer Antwortinformation über die Kommunikation, insbesondere über das oder ein weiteres Kommunikationssignal, d. h. bspw. über UWB, als Antwort auf das Abfragesignal bzw. die Abfrageinformation, bevorzugt durch die Sende-Empfangsvorrichtung oder durch die Kommunikationsvorrichtung des Fahrzeuges,
- Empfangen des Antwortsignals und/oder der Antwortinformation, bevorzugt durch die Kommunikationsvorrichtung oder durch die Sende-Empfangsvorrichtung des ID-Gebers,
- Bestimmen einer Signallaufzeit, insbesondere zwischen einem ersten Zeitpunkt des Aussendens des Abfragesignals und/oder der Abfrageinformation und einem zweiten Zeitpunkt des Empfangens des Antwortsignals und/oder der Antwortinformation,
- Bestimmen der Abstandsinformation anhand der Signallaufzeit.

Bevorzugt wird im Rahmen der Erfindung unter einem "Signal", insbesondere unter dem Begriff "Kommunikationssignal", zumindest eine Information oder zumindest ein Teil einer Datenabfolge, wie ein "Ping-Signal" und das zugehörige "Pong-Signal" als Antwortsignal, verstanden, welche z. B. über Funk übertragen wird, oder es wird alternativ oder zusätzlich darunter zumindest ein (elektromagnetisches, insbesondere Funk-) Signal (im physikalischen Sinne) verstanden, dessen Eigenschaften, wie z. B. die Signalstärke und/oder Signallaufzeit, auswertbar sind. Insbesondere umfasst die Datenabfolge zumindest eine Information, wie z. B. eine ausgesendete (Abfrageinformation) und eine empfangene (Antwortinformation), welche z. B. nacheinander übertragen werden, um die Signallaufzeit bestimmen (d. h. auch abschätzen) zu können.

Es kann möglich sein, dass zur Abstandsermittlung der ID-Geber der Sender des Abfragesignals und das Fahrzeug und/oder die Kommunikationsvorrichtung der Empfänger des Abfragesignals ist. Bevorzugt ist dabei das Fahrzeug und/oder die Kommunikationsvorrichtung der Sender des Antwortsignals und der ID-Geber (insbesondere eine Sende-Empfangsvorrichtung des ID-Gebers) der Empfänger des Antwortsignals. Vorzugsweise führt dabei der ID-Geber die Bestimmung der Abstandsinformation durch, und sendet anschließend z. B. die bestimmte Abstandsinformation an das Fahrzeug, z. B. über die Kommunikation, insbesondere über UWB, und/oder über LF und/oder HF oder eine sonstige Funkverbindung.

Es ist vorzugsweise vorgesehen, dass eine (z. B. erste und/oder zweite) Kommunikation zwischen dem Identifikationsgeber und dem Fahrzeug erfolgt, insbesondere über eine Funkverbindung, bevorzugt mittels eines breitbandigen Kommunikationsverfahren, z. B. Ultrabreitband. Die über die Kommunikation bzw. Funkverbindung übertragbaren und/oder übertragenen Funksignale umfassen z. B. mindestens eines der folgenden Signale:
- ein Initiierungssignal, z. B. ein Wecksignal,
- ein Authentifizierungssignal,
- Daten einer Datenübertragung,
- eine Abstandsinformation,
- Komfortinformationen (z. B. zur Ansteuerung einer Beleuchtung des Fahrzeuges),
- Benutzerinformationen über den Benutzer des Fahrzeuges und/oder benutzerspezifische Fahrzeug(vor-)einstellungen,
- Navigationsinformationen,
- GPS-Informationen (GPS, engl. Global Positioning System),
- Verschlüsselungsinformationen (z. B. einen Verschlüsselungscode),
- Signale zur Abstandsermittlung, insbesondere eine Abfrageinformation und/oder eine Antwortinformation.

Diese Signale können ebenfalls verschlüsselt werden und werden bspw. mittels der Ultrabreitband-Technologie (UWB, engl. ultra-wideband) übertragen und sind somit insbesondere als UWB-Signale ausgeführt.

Insbesondere erfolgt zur Kommunikation (z. B. zur Initiierung) eine erste Signalübertragung über eine erste Kommunikation und anschließend (z. B. zur Antwort) eine zweite Signalübertragung über eine zweite Kommunikation, wobei sich die Funkfrequenzen und/oder die Kommunikationsart der ersten Kommunikation und der zweiten Kommunikation unterscheiden. Des Weiteren kann es vorgesehen sein, dass die Kommunikation eine Lokalisierung (z. B. des ID-Gebers) ermöglicht. So ermöglicht die Kommunikation, insbesondere gemäß der UWB-Technologie, eine verschlüsselte und/oder hochgenaue und/oder abhörsichere Lokalisation bspw. des ID-Gebers. Die Lokalisation basiert vorzugsweise auf einer "Time-of-Flight" Messung, insbesondere unter "Line-of-Sight"-Bedingungen, wobei zur Lokalisation und/oder Auswertung bevorzugt die Lichtgeschwindigkeit und/oder die Signalgeschwindigkeit der Kommunikation Berücksichtigung findet. Besonders bevorzugt erfolgt die Lokalisierung mit einer Auflösung und/oder Genauigkeit im Bereich von 1 cm bis 100 cm, vorzugsweise 10 cm bis 50 cm, besonders bevorzugt 5 cm bis 15 cm. Unter der "Line-of-Sight"-Bedingung wird insbesondere verstanden, dass die Übertragung der Funksignale (z. B. nur bzw. ausschließlich) mit und/oder bei direktem Sichtkontakt zwischen Sender und Empfänger erfolgt. Bspw. kann die Sicherheit dadurch erhöht werden, dass die (erste und/oder zweite) Kommunikation nur unter "Line-of-Sight"-Bedingungen erfolgt.

Sender und/oder Empfänger der (ersten und/oder zweiten) Kommunikation sind vorzugsweise eine Kommunikationsvorrichtung und/oder Erfassungsvorrichtung des Fahrzeuges sowie eine Sende-Empfangsvorrichtung des ID-Gebers. Die Erfassungsvorrichtung ist vorzugsweise eine Abstandsmessungsvorrichtung des Fahrzeuges, d. h. eine Vorrichtung, welche die Abstandsermittlung (z. B. zwischen ID-Geber und Fahrzeug) und/oder den Empfang der Abstandsinformation (direkt) ermöglicht. Insbesondere ist die Kommunikationsvorrichtung und/oder Erfassungsvorrichtung elektrisch und/oder per Funk mit einer Verarbeitungsvorrichtung verbindbar, wobei über die Verbindung und/oder die Verarbeitungsvorrichtung z. B. weitere Schritte zur Abstandsermittlung und/oder eine Auswertung der Abstandsermittlung bzw. Abstandsinformation erfolgen. Die Kommunikationsvorrichtung und/oder Erfassungsvorrichtung und/oder Verarbeitungsvorrichtung und/oder der ID-Geber umfasst vorzugsweise Elektronikkomponenten, wie z. B. integrierte Schaltkreise und/oder Mikroprozessoren und/oder ASICs (anwendungsspezifische integrierte Schaltungen) und/oder digitale Signalprozessoren und/oder Korrelationsempfänger und/oder dergleichen, um z. B. die Abstandsinformation mittels arithmetischer Informationen auszuwerten und/oder zu generieren.

Vorzugsweise ist das Fahrzeug als ein Kraftfahrzeug oder als ein Personenkraftfahrzeug oder als ein Lastkraftfahrzeug oder als ein Elektrofahrzeug oder als ein Hybridfahrzeug ausgebildet. Das Sicherheitssystem umfasst bevorzugt ein Zugangssystem und/oder eine Zentralverriegelung und/oder eine Verriegelungsvorrichtung und/oder ein Schließsystem des Fahrzeuges und/oder ist mit den elektrisch ansteuerbaren Türschlössern und/oder Schließelementen beispielsweise zum automatischen Öffnen des Kofferraumdeckels oder zum Verriegeln der Türen des Fahrzeuges elektrisch verbunden. Vorzugsweise weist das Fahrzeug eine Steuereinheit auf, die mit der Bordelektronik verbunden ist. Die Steuereinheit kann den Authentifizierungsvorgang bzw. die Authentifizierungsabfrage mit dem ID-Geber durchführen. Hierbei kann die Steuereinheit unmittelbar in der Verriegelungsvorrichtung, oder an einer weiteren relevanten Stelle des Fahrzeuges angeordnet sein. Insbesondere ist es vorgesehen, dass falls die Authentifizierung negativ sein sollte, keine Änderung des Zustandes der Verriegelungsvorrichtung erfolgt. Somit wird wirksam verhindert, dass unberechtigte Personen die Verriegelungsvorrichtung in den Entriegelungszustand bringen. Vorteilhafterweise ist das Zugangskontrollsystem mit einem Schließsystem verbunden, welches unter anderem die Fahrzeugtüren, Heckklappe, und dergleichen verriegeln und entriegeln kann. Nach einer positiven Authentifizierung erfolgt eine Entriegelung der Fahrzeugtür und/oder der Heckklappe, so dass der Benutzer (Bediener) die Tür, Heckklappe aktiv öffnen kann.

Ferner ist es denkbar, dass die Lokalisierung und/oder Abstandsinformation durch ein weiteres externes Gerät auswertbar ist. Insbesondere kann es vorgesehen sein, dass der ID-Geber und/oder das Fahrzeug eine Schnittstelle umfasst, welche mit dem externen Gerät elektrisch und/oder über Funk verbindbar ist, wobei insbesondere über die Schnittstelle eine (Daten-) Übertragung, insbesondere der Abstandsinformation oder einer davon abhängigen Information, erfolgt. Bevorzugt wird die übertragene (Abstands-) Information dazu genutzt, um darauf basierend einem Benutzer des externen Geräts eine Information anzuzeigen bzw. auszugeben, welche das Auffinden des ID-Gebers ermöglicht.

Bevorzugt wird die erste und/oder zweite Kommunikation mittels der Ultrabreitband-Technologie (kurz: Ultrabreitband bzw. UWB) durchgeführt. Die Kommunikation mittels UWB basiert dabei insbesondere auf der technischen Überlegung, dass sich die Kanalkapazität linear mit der Bandbreite des Sendesignals und logarithmisch mit dessen Leistung erhöht. Bspw. ist bei Kommunikationstechnologien wie Bluetooth die verfügbare Bandbreite schmal und konstant. UWB nutzt dagegen einen sehr breiten Frequenzbereich, um bei reduzierter Sendeleistung eine hohe Kanalkapazität zu ermöglichen. Dies hat den Vorteil, dass eine Datenübertragung bei sehr geringer Leistungsaufnahme durch den (UWB-) Sender erfolgen kann. Die maximale Ausgangsleistung eines UWB-Senders, wie z. B. der (ersten und/oder zweiten) Kommunikationseinheit, beträgt dabei z. B. 1 mW.

Insbesondere kommt zur Kommunikation, z. B. zur ersten und/oder zweiten Kommunikation, insbesondere zur Datenübertragung, ein Multiplexverfahren, vorzugsweise ein Frequenzmultiplexverfahren wie ein Orthogonal Frequency Division Multiplexing (OFDM) Verfahren und/oder ein Codemultiplexverfahren wie ein Code Division Multiple Access Verfahren, insbesondere Direct-Sequence-Code Division Multiple Access (DS-CDMA), zum Einsatz. Bevorzugt werden zur Signal- und/oder Datenübertragung drahtlos impulsförmige Signale übertragen. Dabei erfolgt z. B. auch eine Verschiebung der Pulse mittels (pseudo)zufälligen Werten, wobei dann (UWB-) Sender und (UWB-) Empfänger die gleichen Werte zur Verschiebung berücksichtigen. Vorzugsweise erfolgt vor oder bei Beginn der Signal- und/oder Datenübertragung eine zeitliche Synchronisation von (UWB-) Sender und (UWB-) Empfänger. Sender und/oder Empfänger, insbesondere UWB-Sender und/oder UWB-Empfänger, können bspw. eine (erste und/oder zweite) Kommunikationseinheit und/oder die zugehörigen Kommunikationsschnittstellen und/oder eine Kommunikationsvorrichtung (des Fahrzeuges) und/oder eine Sende-Empfangsvorrichtung und/oder eine (erste und/oder zweite) Sende-Empfangseinheit (des ID-Gebers) sein und/oder umfassen. Zur Auswertung des empfangenen Signals umfasst der (UWB-) Sender und/oder der (UWB-) Empfänger z. B. Elektronikkomponenten wie Komparatoren zum Vergleich empfangener Impulse und/oder Korrelationsempfänger und/oder integrierte Schaltkreise und/oder Mikroprozessoren und/oder Elektronikkomponenten zur Durchführung einer Fast Fourier Transformation.

Die Übertragung einer Abstandsinformation und/oder die Kommunikation des ID-Gebers mit dem Fahrzeug und/oder mit dem Sicherheitssystem des Fahrzeuges, insbesondere die Datenübertragung sicherheitsrelevanter Daten, und/oder die Abstandsermittlung, insbesondere mittels UWB, erfolgt vorzugsweise verschlüsselt. Hierzu kommen bevorzugt kryptographische Sicherheitsmechanismen wie RSA zum Einsatz, welche z. B. Verbindungsschlüssel und/oder Authentifizierungsmechanismen und/oder die Nutzung geheimer (privater) und öffentlicher Schlüssel und/oder ein symmetrisches und/oder asymmetrisches Kryptosystem und/oder eine hybride Verschlüsselung umfassen. Es wird somit der Vorteil erzielt, dass eine sichere und zuverlässige Übertragung möglich ist.

Die Kommunikation über das breitbandige Kommunikationsverfahren, vorzugsweise über UWB, und/oder mittels des breitbandigen Kommunikationssignals, erfolgt bevorzugt über mindestens einen großen Frequenzbereich, bevorzugt mit einer (insgesamten) Bandbreite von (mindestens) 500 MHz bis 900 MHz und/oder (mindestens) 3.5 GHz bis 10 GHz und/oder mindestens 5 GHz und/oder mindestens 2 GHz und/oder mindestens 1 GHz und/oder mindestens 500 MHz und/oder von mindestens 40 % und/oder mindestens 30 % und/oder mindestens 20 % und/oder mindestens 10 % des arithmetischen Mittelwertes von unterer und oberer Grenzfrequenz des genutzten Frequenzbandes. Die insgesamte Bandbreite kann sich dabei z. B. aus der Bandbreite von einzelnen Frequenzbändern zusammensetzen, welche gemeinsam zur Kommunikation genutzt werden, oder die Bandbreite eines einzigen zur Kommunikation genutzten Frequenzbandes bezeichnen. Bspw. kann der Frequenzbereich im Bereich von 0 bis 40 GHz, insbesondere 500 MHz bis 900 MHz, bevorzugt 3,5 GHz bis 10 GHz, vorzugsweise 3,5 GHz bis 6,8 GHz, bevorzugt 20 MHz bis 11 GHz, besonders bevorzugt 30 MHz bis 10,6 GHz und/oder 22,0 GHz bis 26,7 GHz und/oder 1 MHz bis 12,4 GHz und/oder im Wesentlichen 700 MHz genutzt werden. Weiter kann es vorgesehen sein, dass für die (UWB-) Kommunikation der maximale Mittelwert der spektralen Leistungsdichte im Bereich zwischen -90,0 dBm/MHz und -20,0 dBm/MHz liegt, vorzugsweise maximal - 41,3 dBm/MHz. Die Datenübertragungsrate zur Datenübertragung beträgt vorzugsweise mindestens 1 Mbit/s oder mindestens 4 Mbit/s oder mindestens 6 Mbit/s, insbesondere maximal 6,8 Mbit/s oder 10 Mbit/s. Somit ist eine schnelle und störungssichere Übertragung möglich.

Vorzugsweise werden zur (insbesondere UWB-) Kommunikation Pulse ausgesendet. Der Abstand zwischen den Pulsen kann zweckmäßigerweise um Größenordnungen höher als die Pulslänge sein. Es ist dabei denkbar, dass zur Datenübertragung eine Pulsweitenmodulationstechnik und/oder eine Pulsphasenmodulationstechnik genutzt werden. Dies gewährleistet eine schnelle, zuverlässige und/oder sichere Datenkommunikation.

Es kann ferner vorgesehen sein, dass gemäß der UWB-Kommunikation auch die Abstandsermittlung mittels einer Entfernungsmessung wie einer Laufzeitanalyse eines (UWB-) Funksignals erfolgt. Insbesondere kann hier ein Frequenzbereich von 22,0 GHz bis 26,6 GHz eingesetzt werden. Die Mittenfrequenz kann bspw. im Frequenzbereich von ca. 1 GHz bis 15 GHz liegen und eine Frequenzbandbreite von zumindest 500 MHz vorgesehen sein.

Weiter kann es im Rahmen der Erfindung möglich sein, dass die Sende-Empfangsvorrichtung des ID-Geber über eine Funkverbindung ein Signal von dem Fahrzeug (z. B. von dem fahrzeugseitigen Sicherheitssystem und/oder der Kommunikationsvorrichtung) empfängt, und vorzugsweise derart mit einer Verarbeitungseinheit verbunden und/oder verbindbar ist, dass das über die Funkverbindung durch die Sende-Empfangsvorrichtung empfangene Signal, insbesondere ein Wecksignal und/oder eine Information zur Abstandsermittlung, von der Verarbeitungseinheit auswertbar ist. Es ist dabei denkbar, dass die Funkverbindung eine erste Funkverbindung einer ersten Kommunikation (wie eine UWB-Funkverbindung) einer ersten Sende-Empfangseinheit und/oder eine zweite Funkverbindung einer zweiten Kommunikation (wie eine LF- und/oder HF-Funkverbindung) einer zweiten Sende-Empfangseinheit der Sende-Empfangsvorrichtung ist. Insbesondere kann die Sende-Empfangsvorrichtung und/oder die Verarbeitungseinheit aufgrund des Empfangs des Signals geweckt werden. Wecken bezeichnet insbesondere die Aktivierung von Funktionen und/oder Komponenten des ID-Gebers oder auch die Überführung von einem Ruhezustand in einen Wachzustand, z. B. mit höherem Energieverbrauch. Das (Weck-) Signal kann insbesondere eine Kommunikation des ID-Gebers mit dem Sicherheitssystem auslösen.

Insbesondere kann das (fahrzeugseitige) Sicherheitssystem ein Zugangssystem (z. B. Zentralverriegelung für die Fahrzeugtüren) aufweisen, welches Active-Keyless-Entry-, Passive-Keyless-Entry- oder Keyless-Go-Funktionalität besitzt. Das Sicherheitssystem dient z. B. der schlüssellosen Aktivierung mindestens einer Sicherheitsfunktion, insbesondere eines Zugangssystems des Fahrzeuges, insbesondere Kraftfahrzeuges. Dazu ist insbesondere ein durch das (Weck-) Signal initiierter bzw. sich dem Empfang des (Weck-) Signals anschließender Authentifizierungsvorgang und/oder eine Abstandsermittlung (mit positivem Ergebnis) zur Aktivierung notwendig. Das positive Ergebnis betrifft z. B. eine erfolgreiche Codeüberprüfung und/oder Codeübereinstimmung bei der Authentifizierung und/oder einen durch die Abstandsermittlung bestimmten Abstand des ID-Gebers zum Fahrzeug, welcher geringer sein muss als ein Maximalabstand. Durch den Authentifizierungsvorgang können Funktionen, insbesondere Sicherheitsfunktionen, des Sicherheitssystems des Fahrzeuges aktiviert werden, wie z. B. ein Öffnen oder Schließen einer Schließvorrichtung des Fahrzeugs, z. B. auch Türen oder Klappen im Heck und/oder Seitenbereich des Fahrzeugs, ein Starten des Motors oder ein Aktivieren bzw. Deaktivieren der Wegfahrsperre.

Das (Weck-) Signal wird z. B. von zumindest einer fahrzeugseitigen Kommunikationsvorrichtung und/oder Erfassungsvorrichtung des Sicherheitssystems ausgesendet. Dazu können bspw. Kommunikationsteile, insbesondere Antennen in verschiedenen Bereichen des Fahrzeugs vorgesehen sein, z. B. außerhalb des Fahrzeugs, im Innenraum, an den Türen, insbesondere den Türgriffen, am Dach, im Heck und/oder Seitenbereich des Fahrzeuges oder im Kofferraum. Wenn das (Weck-) Signal über eine UWB- und/oder LF-Funkfrequenz versendet wird, ist die Reichweite stark begrenzt und wird auch durch die Fahrzeugkarosserie stark abgeschwächt und/oder (vollständig) abgeschirmt. Dies ermöglicht z. B. auch eine Abstandsermittlung. Dadurch ist es ferner auch möglich, dass ein das (Weck-) Signal empfangendes Gerät (z. B. ein ID-Geber) innerhalb oder außerhalb des Fahrzeugs geortet werden kann, und vorzugsweise die Ortung innerhalb des Fahrzeuges von der Ortung außerhalb des Fahrzeuges unterschieden werden. Unterstützend kann bspw. auch eine weitere Methode zur Abstandsermittlung zum Einsatz kommen, wie eine Auswertung der Signalstärke oder Signallaufzeit ("Time-of-Flight"). Es wird nach der Ortung und/oder dem Empfang des Signals und/oder der Abstandsermittlung (bei positiven Ergebnis) bspw. ein Authentifizierungsvorgang initiiert, welcher insbesondere das Senden eines Antwortsignals an das Sicherheitssystem umfasst, wobei das Antwortsignal z. B. einen Code (Zugangscode) zur Identifikationsprüfung enthalten kann. Das Antwortsignal wird z. B. von der fahrzeugseitigen Kommunikationsvorrichtung oder von einer anderen fahrzeugseitigen Elektronik empfangen und ausgewertet. Es ist vorzugsweise bei dem ID-Geber, insbesondere bei einer Sende-Empfangsvorrichtung des ID-Gebers und/oder der (ersten und/oder zweiten) Sende-Empfangseinheit, eine UWB- und/oder LF-Antenne vorgesehen, die das (Weck-) Signal vom Fahrzeug empfangen kann. Es kann eine Antenne des ID-Gebers, bspw. eine UWB- und/oder LF-Antenne, zum Empfang und eine separate bzw. die gleiche Antenne zum Senden von Signalen vorgesehen sein.

Es können ferner vorzugsweise Kommunikationsteile vorgesehen sein, welche jeweils ein oder mehrere Antennen, insbesondere UWB-Antennen, aufweisen. Dabei ist es denkbar, dass zur (insbesondere UWB-) Kommunikation ein MIMO (Multiple Input Multiple Output) Verfahren vorgesehen ist, sodass mehrere Sende- und/oder Empfangsantennen genutzt werden. Es ist z. B. eine Signalverarbeitung für die durch die Antennen empfangenen Signale vorgesehen. Bevorzugt sind dabei die Kommunikationsteile am Fahrzeug derart angeordnet, dass eine Durchführung eines MIMO Verfahrens möglich ist.

Es ist denkbar, dass das Kommunikationsteil, insbesondere die jeweilige Antenne, derart ausgestaltet ist, dass die Bauform und/oder die Antennenparameter und/oder die Antennenbauform und/oder die Länge und/oder die Ausdehnung der Antenne an das UWB-Verfahren und/oder die zur Kommunikation verwendete (insbesondere UWB-) Bandbreite angepasst ist. So ist es z. B. möglich, dass zumindest eine der jeweiligen Antennen als lineare Antenne und/oder als Flächenantenne und/oder als Gruppenantenne ausgeführt ist. Insbesondere ist die Länge der Antenne dabei der für die Kommunikation verwendeten Mittenfrequenz und/oder Pulslänge angepasst. Die Antennenbauform der Antenne kann dabei insbesondere eine UWB-spezifische Bauform, z. B. eine Rugby-Ball Antenne oder in einer Tapered Slot Bauweise, sein.

Bevorzugt kann das Kommunikationsteil, insbesondere die Antenne, eine planare, metallische Struktur und/oder mindestens einen Wellenleiter aufweisen. Ferner ist es denkbar, dass das Kommunikationsteil / die Antenne derart ausgestaltet ist, dass ein Senden und/oder Empfangen von Hochfrequenzsignalen durchführbar ist. Die Antenne kann bspw. als eine omnidirektionale Antenne ausgeführt sein. Auch kann das Kommunikationsteil bzw. die Antenne eine Richtwirkung aufweisen, und hierzu mindestens ein Dipolelement, insbesondere einen dreidimensionales Dipolelement, umfassen.

Eine Datenübertragung kann weiter vorzugsweise derart erfolgen, dass eine UWB-spezifische Modulationsart genutzt wird. Eine solche Modulationsart ist bspw. eine Pulsweitenmodulation und/oder eine Pulsphasenmodulation. Des Weiteren ist es denkbar, dass die Informationen der Datenübertragung durch eine Kodierung der Polarität und/oder der Amplitude und/oder die Richtung von (durch die Kommunikation ausgesendeten) Pulsen auf ein Kommunikationssignal moduliert wird. Hierzu können z. B. auch orthogonale Pulse eingesetzt werden.

Vorzugsweise sind eine Erfassungsvorrichtung und/oder das Übertragungssystem fahrzeugseitig, d. h. im oder am Fahrzeug, vorgesehen. Der mobile ID-Geber ist in der Regel nicht im oder am Fahrzeug fest angeordnet, es sei denn dieser ist in ein Schloss oder in eine entsprechende Aufnahme durch seinen Benutzer eingesteckt worden. Ansonsten kann der mobile ID-Geber ortsungebunden vom Fahrzeug mitgenommen werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Seitenansicht eines Fahrzeugs,
- Figur 2 ― 4: schematische Ansichten auf ein Fahrzeug in einer Draufsicht,
- Figur 5 ― 7: schematische Darstellungen eines erfindungsgemäßen Sicherheitssystem,
- Figur 8 + 9: weitere schematische Darstellungen eines erfindungsgemäßen Sicherheitssystems,
- Figur 10: eine weitere schematische Darstellung von Teilen eines erfindungsgemäßen Sicherheitssystems,
- Figur 11: eine schematische Draufsicht auf ein Fahrzeug mit einem erfindungsgemäßen Sicherheitssystem und
- Figur 12: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

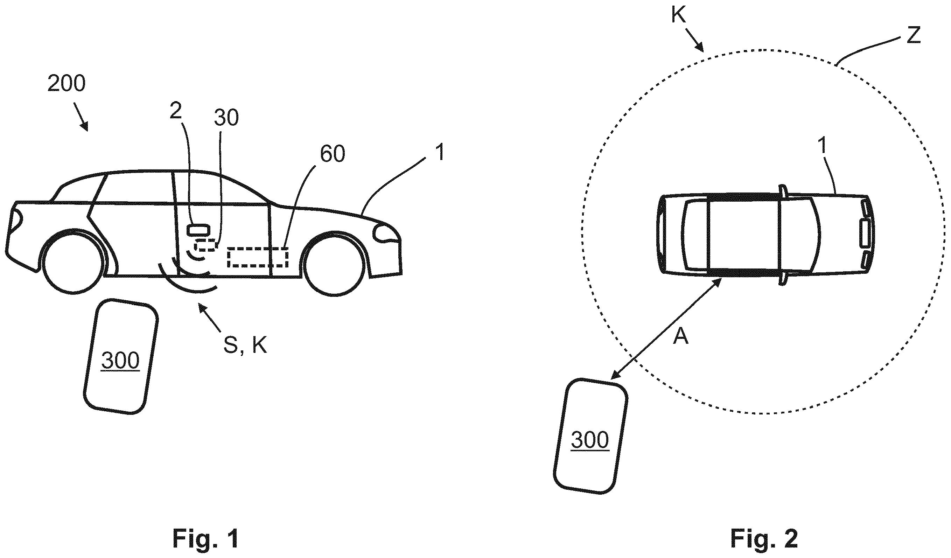

In Figur 1 ist schematisch ein Fahrzeug 1 in einer Seitenansicht gezeigt. Dabei umfasst das Fahrzeug 1 zumindest Teile eines erfindungsgemäßen Sicherheitssystems 200. So ist eine Kommunikationseinheit 30 sowie eine Verarbeitungsvorrichtung 60 am und/oder im Fahrzeug 1 vorgesehen. Optional ist zudem ein Annäherungssensor 2 zur Erfassung einer Annäherung eines Bedieners des Fahrzeuges 1 im Bereich eines Türgriffs des Fahrzeugs 1 angeordnet. Die Kommunikationseinheit 30 dient dabei zur Kommunikation mit einem mobilen Identifikationsgeber 300. Hierzu wird durch die Kommunikationseinheit 30 ein Kommunikationsfeld K erzeugt, wobei über Funkwellen des Kommunikationsfeldes K Informationen drahtlos übermittelt werden können. Zur Kommunikation mit dem mobilen Identifikationsgeber 300 werden dabei bspw. Kommunikationssignale S von der Kommunikationseinheit 30 empfangen und/oder gesendet, vorzugsweise über das Kommunikationsfeld K. Insbesondere dient das Kommunikationsfeld K (als ein Ultrabreitband-Kommunikationsfeld K) zur Übertragung von Ultrabreitband-Kommunikationssignalen S, wobei in diesem Fall das Kommunikationssignal S Funkwellen (des Kommunikationsfeldes K) nutzt, welche in einem besonders breiten Frequenzspektrum liegen. Bevorzugt umfassen die Ultrabreitband-Kommunikationssignale S somit ein besonders breites Frequenzspektrum. Für das Kommunikationsfeld K und/oder für das Kommunikationssignal S wird vorzugsweise ein Frequenzbereich mit einer Bandbreite von mindestens 500 MHz genutzt. Entsprechend kann das Kommunikationssignal S als breitbandiges Kommunikationssignal S bezeichnet werden.

Es kann mindestens eine Sicherheitszone Z um das Fahrzeug vorgesehen sein, wobei die Ausdehnung der Sicherheitszone Z insbesondere in Abhängigkeit von dem Kommunikationsfeld K und/oder einer Kommunikation des Fahrzeuges 1 definiert wird. Dies ist in Figur 2 schematisch dargestellt, wobei die Kreisform des Kommunikationsfeldes K und/oder der Sicherheitszone Z lediglich zur Veranschaulichung dient. In der Realität kann dabei die Reichweite und/oder die Ausdehnung der Sicherheitszone Z auch abhängig von einer Umgebung des Fahrzeugs 1 unregelmäßig verlaufen.

Die Sicherheitszone Z und/oder verschiedene Sicherheitszonen Z des Fahrzeuges 1 lassen sich jeweils in unterschiedlicher Weise bestimmen bzw. definieren. So wird die Reichweite der Kommunikation über das Kommunikationssignal S insbesondere durch die Ausdehnung des Kommunikationsfeldes K bestimmt. In Abhängigkeit von dieser physikalischen Grenze der Reichweite kann die Sicherheitszone Z gemäß einer ersten Möglichkeit definiert werden. Hierbei kann eine Abstandsermittlung genutzt werden, um eine Bestimmung eines Abstands A zwischen dem Identifikationsgeber 300 und dem Fahrzeug 1 durchzuführen. Wenn die Sicherheitszone Z durch die maximale Reichweite des Kommunikationsfeldes K bestimmt wird, kann zur Abstandsermittlung z. B. bei einer ausbleibenden Kommunikation davon ausgegangen werden, dass sich der Identifikationsgeber 300 außerhalb der Sicherheitszone Z befindet. In diesem Fall wird die Abstandsermittlung anhand der maximalen Kommunikationsreichweite durchgeführt. Alternativ oder zusätzlich kann es gemäß einer weiteren Möglichkeit vorgesehen sein, dass die Sicherheitszone Z als ein definierter Maximalabstand zum Fahrzeug 1 festgelegt ist, welcher bspw. innerhalb der maximalen Kommunikationsreichweite liegt. Zur Abstandsermittlung wird dann aktiv die Kommunikation durchgeführt und empfangene Signale ausgewertet. Hierfür muss die Abstandsermittlung Abstandsinformationen über einen konkreten Abstand A des Identifikationsgebers 300 zum Fahrzeug 1 bestimmen. Dies kann bspw. durch eine Laufzeitanalyse des Kommunikationssignals S erfolgen. Die Auswertung des Kommunikationssignals S zur Abstandsermittlung entspricht dabei insbesondere einer Auswertung der Kommunikation zwischen dem Fahrzeug 1 und dem Identifikationsgeber 300 und/oder einer Auswertung des Kommunikationsfeldes K.

Die Abstandsermittlung und/oder eine Auswertung der dadurch gewonnenen Abstandsinformation durch eine Verarbeitungsvorrichtung 60 des Fahrzeugs 1 ermöglicht eine genaue Lokalisierung des Identifikationsgebers 300 relativ zu der Sicherheitszone Z. Die Abstandsermittlung wird bspw. dann initiiert, wenn durch einen Annäherungssensor 2 des Fahrzeugs 1 eine Annäherung des Identifikationsgebers 300 detektiert wird. Alternativ oder zusätzlich kann die Abstandsermittlung auch dann initiiert werden, sobald eine Kommunikation des Fahrzeuges 1 mit dem Identifikationsgeber 300 möglich ist und/oder eine Verbindung zur Kommunikation aufgebaut wurde. Die Abstandsermittlung kann weiter auch dadurch initiiert werden, dass das Eintreten des Identifikationsgebers 300 in eine bestimmte Sicherheitszone Z überwacht wird, und beim bzw. nach dem Eintreten die Initiierung der Abstandsermittlung erfolgt.

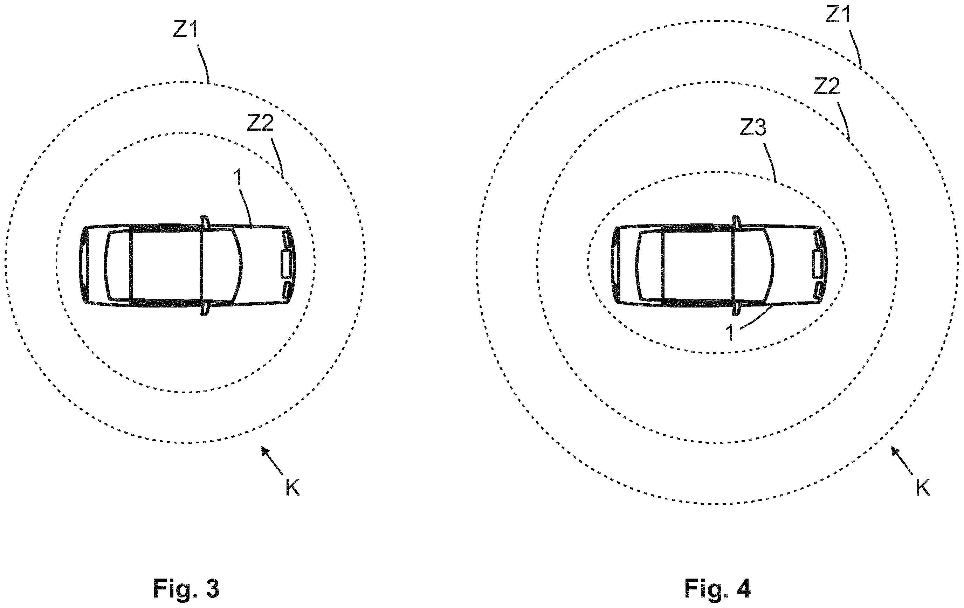

In den Figuren 3 und 4 ist schematisch dargestellt, dass auch mehrere Sicherheitszonen Z vorgesehen sein können. Bspw. können in unterschiedlichen Abständen vom Fahrzeug 1 eine erste Sicherheitszone Z1 und eine zweite Sicherheitszone Z2 sowie ggf. eine dritte Sicherheitszone Z3 und/oder weitere Sicherheitszonen Z vorgesehen sein. Dabei ist es denkbar, dass die dritte Sicherheitszone Z3 mit dem geringsten Abstand zum Fahrzeug 1 eine Komfortzone Z3 bildet, wobei eine Lokalisierung des Identifikationsgebers 300 innerhalb der Komfortzone Z3 (insbesondere lediglich) die Aktivierung von Komfortfunktionen bewirkt. Eine solche Komfortfunktion ist bspw. eine Aktivierung einer Vorfeldbeleuchtung des Fahrzeuges 1, welche bevorzugt beim Eintreten des Identifikationsgebers 300 in die Komfortzone Z3 erfolgt. Eine weitere Komfortfunktion ist bspw. die Aktivierung einer Fahrzeugbeleuchtung. Die erste Sicherheitszone Z1 erstreckt sich insbesondere in einem größeren Abstand vom Fahrzeug 1 als die zweite Sicherheitszone Z2. Der Identifikationsgeber 300 wird bspw. dann in der ersten Sicherheitszone Z1 lokalisiert, wenn eine zweite Kommunikation durch eine zweite Kommunikationseinheit 32, bspw. eine LF-Kommunikation zwischen dem Fahrzeug 1 und dem Identifikationsgeber 300, initiiert wird. Hierbei und/oder in Abhängigkeit von einer weiteren Lokalisierung, zum Beispiel anhand der zweiten Kommunikation, und/oder bei einer erfolgreichen Voridentifizierung des Sicherheitssystems 200 mit dem Identifikationsgeber 300 kann eine erste Kommunikation einer ersten Kommunikationseinheit 31 mit dem Identifikationsgeber 300, bevorzugt über Ultrabreitband, initiiert werden. Anhand dieser ersten Kommunikation kann dann erneut eine Abstandsermittlung durchgeführt werden, bspw. über eine Auswertung des Kommunikationssignals S der ersten Kommunikation, d. h. eines ersten Kommunikationssignals S1. Diese erneute Abstandsermittlung kann vorzugsweise zyklisch wiederholt werden. Wird nun durch diese erneute Abstandsermittlung ein Abstand A des Identifikationsgebers 300 vom Fahrzeug 1 festgestellt, welcher gleich und/oder geringer als der Abstand der zweiten Sicherheitszone Z2 vom Fahrzeug 1 ist, so erfolgt eine Lokalisierung des Identifikationsgebers 300 innerhalb der zweiten Sicherheitszone Z2. Bei einer erfolgreichen Lokalisierung des Identifikationsgebers 300 innerhalb der zweiten Sicherheitszone Z2 kann bspw. ein Authentifizierungsvorgang durchgeführt werden. Es kann dann wiederrum eine erneute Abstandsermittlung durchgeführt werden. Wird durch diese Abstandsermittlung ein Abstand A des Identifikationsgebers 300 vom Fahrzeug 1 festgestellt, welcher gleich und/oder geringer als der Abstand der dritten Sicherheitszone Z3 vom Fahrzeug 1 ist, so erfolgt eine Lokalisierung des Identifikationsgebers 300 innerhalb der dritten Sicherheitszone Z3. Bei einer erfolgreichen Lokalisierung des Identifikationsgebers 300 innerhalb der dritten Sicherheitszone Z3 kann bspw. ein erneuter Authentifizierungsvorgang durchgeführt werden und/oder eine Komfortfunktion aktiviert werden und/oder ein Zugangssystem des Fahrzeuges 1 angesteuert werden und/oder eine Tür und/oder ein Schloss des Fahrzeuges 1 geöffnet werden.

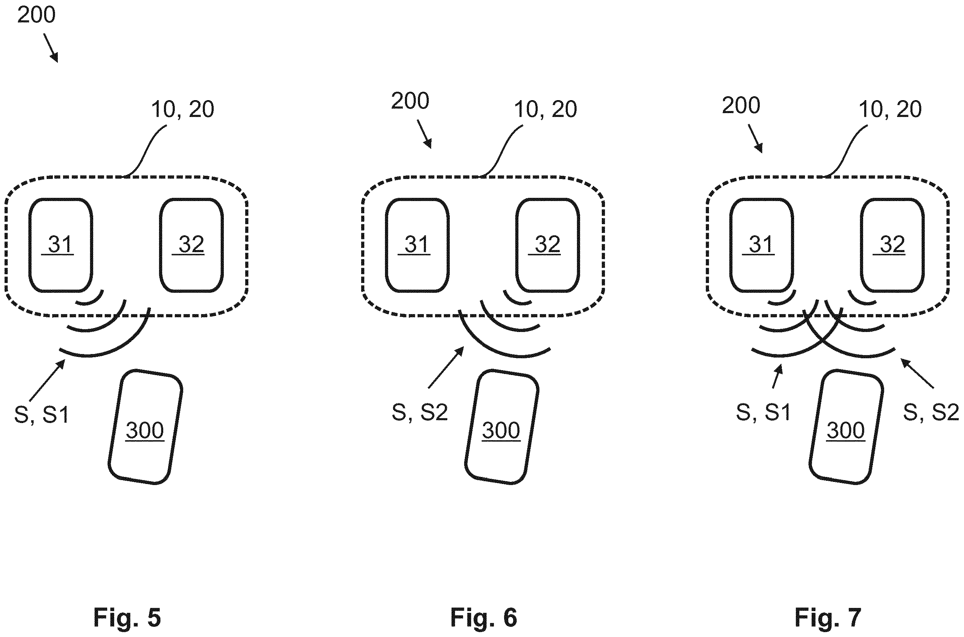

In den Figuren 5 bis 7 ist dieser Vorgang, insbesondere die erste und zweite Kommunikation, näher erläutert. Zur Durchführung der Kommunikation umfasst dabei das Sicherheitssystem 200 mindestens eine Erfassungsvorrichtung 10 und/oder mindestens eine Kommunikationsvorrichtung 20. Die Kommunikationsvorrichtung 20 kann dabei bspw. zumindest Teil der Erfassungsvorrichtung 10 des Fahrzeugs 1 sein. So können die Kommunikationsvorrichtung 20 und/oder die Erfassungsvorrichtung 10 zum Beispiel elektrisch miteinander verbunden sein und/oder als eine (gemeinsame) insbesondere elektrische Komponente ausgebildet sein. Auch ist es denkbar, dass die Kommunikationsvorrichtung 20 die Signale der Kommunikation empfängt, ggf. auswertet und insbesondere eine Abstandsermittlung durchführt und/oder die Abstandsinformation erfasst. Somit kann die Kommunikationsvorrichtung 20 auch die Erfassungsvorrichtung 10 bilden (bzw. dieser entsprechen) und/oder umgekehrt. Die Kommunikationsvorrichtung 20 und/oder die Erfassungsvorrichtung 10 umfasst zumindest eine Kommunikationseinheit 30, vorzugsweise eine erste Kommunikationseinheit 31 und eine zweite Kommunikationseinheit 32. Die erste Kommunikationseinheit 31 dient dabei einer ersten Kommunikation mit dem Identifikationsgeber 300 und die zweite Kommunikationseinheit 32 dient einer zweiten Kommunikation mit dem Identifikationsgeber 300.

Für die erste Kommunikation wird ein erstes Kommunikationssignal S1 und für die zweite Kommunikation wird ein zweites Kommunikationssignal S2 genutzt. Gemäß Figur 5 wird bspw. die erste Kommunikation über das erste Kommunikationssignal S1 zur Abstandsermittlung durchgeführt. Gemäß Figur 6 kann weiter die zweite Kommunikation über das zweite Kommunikationssignal S2 genutzt werden, um z. B. ein Wecksignal an den Identifikationsgeber 300 zu übertragen und/oder ebenfalls eine Abstandsermittlung durchzuführen. Auch kann die Aussendung des Wecksignals und die anschließende Überwachung auf ein Antwortsignal als Abstandsermittlung aufgefasst werden (in Bezug auf die maximale Kommunikationsreichweite, welche als Indikator für ein Eintreten in eine Sicherheitszone Z und/oder für den erforderlichen Abstand A genutzt wird). Gemäß Figur 7 wird gleichzeitig eine erste und zweite Kommunikation genutzt. So kann bspw. über die zweite Kommunikation, d. h. über das zweite Kommunikationssignal S2, die Abstandsermittlung durchgeführt werden, wobei das Ergebnis der Abstandsermittlung (d. h. die Abstandsinformation) anhand einer weiteren Abstandsermittlung durch die erste Kommunikation mit dem ersten Kommunikationssignal S1 plausibilisiert wird. Auch ist es denkbar, dass eine Authentifizierung über die erste und/oder zweite Kommunikation durchgeführt wird. Weiter kann es vorgesehen sein, dass die erste Kommunikation nur dann genutzt wird, wenn beispielsweise die zweite Kommunikation gestört ist.

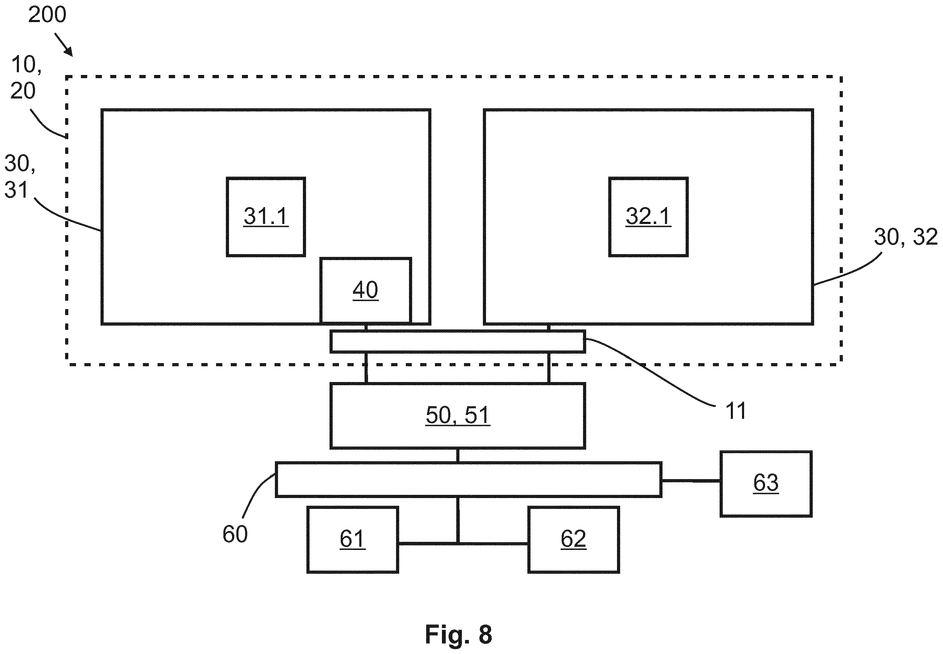

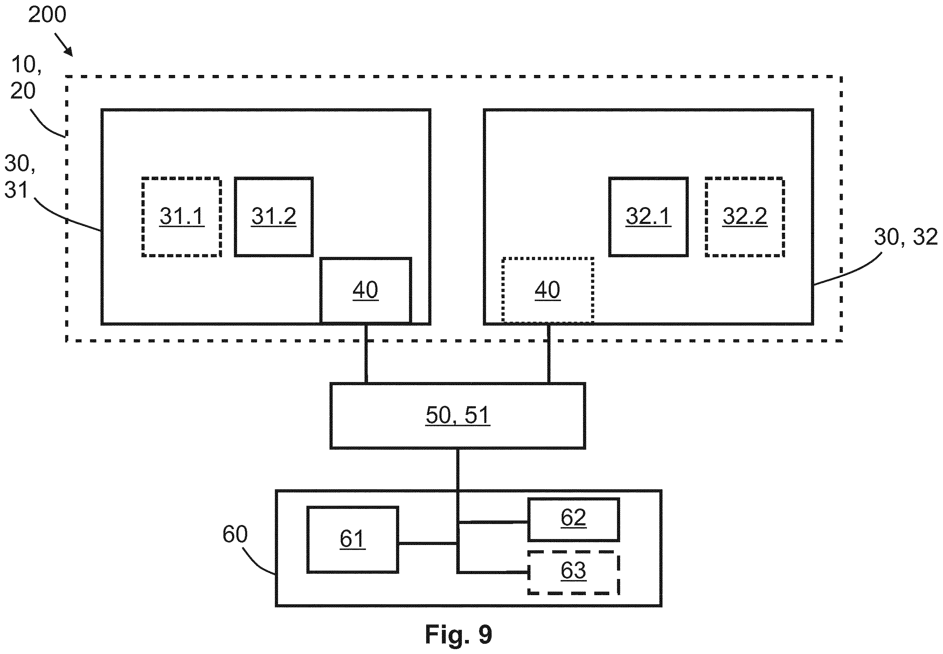

In Figur 8 ist ein schematischer Aufbau einer Erfassungsvorrichtung 10 und/oder einer Kommunikationsvorrichtung 20 eines erfindungsgemäßen Sicherheitssystems 200 dargestellt. Die Erfassungsvorrichtung 10 und/oder die Kommunikationsvorrichtung 20 umfasst dabei zumindest eine Kommunikationseinheit 30, insbesondere eine erste Kommunikationseinheit 31 und eine zweite Kommunikationseinheit 32. Die erste Kommunikationseinheit 31 umfasst mindestens eine erste Kommunikationsschnittstelle 31.1, insbesondere eine Ultrabreitband-Schnittstelle und/oder eine Bluetooth-Schnittstelle. Die zweite Kommunikationseinheit 32 umfasst mindestens eine zweite Kommunikationsschnittstelle 32.1, vorzugsweise eine LF-Schnittstelle und/oder eine HF-Schnittstelle. In Figur 9 ist gezeigt, dass optional die erste Kommunikationseinheit 31 mindestens eine weitere erste Kommunikationsschnittstelle 31.2, vorzugsweise eine Bluetooth-Schnittstelle, aufweisen kann. Ebenso kann die zweite Kommunikationseinheit 32 noch eine weitere zweite Kommunikationsschnittstelle 32.2, vorzugsweise eine HF-Schnittstelle und/oder Bluetooth-Schnittstelle, umfassen. Die Kommunikationsschnittstellen dienen dabei zur Durchführung der ersten und/oder zweiten Kommunikation über die entsprechende Kommunikationstechnologie. Weiter können die Kommunikationsschnittstellen auch jeweils mit entsprechenden Kommunikationsteilen 35, wie Antennen, elektrisch verbunden sein. Somit ist die Kommunikationsvorrichtung 20 in der Lage, über eine oder mehrere Kommunikationstechnologien eine Kommunikation mit dem Identifikationsgeber 300 durchzuführen. Insbesondere kann die Kommunikationsvorrichtung 20 selbstverständlich auch nur eine einzige (zum Beispiel erste) Kommunikationseinheit 30, 31 und/oder nur eine einzige (zum Beispiel erste) Kommunikationsschnittstelle aufweisen, sodass nur eine einzige (zum Beispiel erste) Kommunikation über eine einzige Kommunikationstechnologie mit dem Identifikationsgeber 300 möglich ist, zum Beispiel über Ultrabreitband. Die Informationen der so über die Kommunikationsteile 35 von der Kommunikationsvorrichtung 20 empfangenen Kommunikationssignale S werden anschließend über ein Übertragungssystem 50 des Fahrzeugs 1 an eine Verarbeitungsvorrichtung 60 des Fahrzeugs 1 übertragen. Die Informationen, wie eine Abstandsinformation, können dabei bspw. auch verschlüsselt übertragen werden. Optional umfasst die Kommunikationsvorrichtung 20 und/oder jede (oder nur eine einzige) Kommunikationseinheit 30 hierzu zumindest eine Verschlüsselungsvorrichtung 40. Die Verschlüsselungsvorrichtung 40 ist dabei zum Beispiel als integrierter Schaltkreis, insbesondere als Sicherheitschip ausgebildet. Bei der Übertragung über das Übertragungssystem 50 wird dabei die Information durch zumindest eine Übertragungsstation 51 des Fahrzeugs 1 übertragen. Das Übertragungssystem 50 ist bspw. als Bus-System des Fahrzeugs 1 ausgeführt. Die Übertragungsstation 51 ist dann bspw. ein Bus-Teilnehmer des Übertragungssystems 50.

Zur Durchführung der Abstandsermittlung kann bspw. die in den Figuren 8 und 9 gezeigte Verarbeitungsvorrichtung 60 genutzt werden, welche bspw. als eine zentrale Verarbeitungsvorrichtung 60 einer zentralen Fahrzeugelektronik des Fahrzeugs 1 ausgeführt ist. Somit ist die Verarbeitungsvorrichtung 60 beispielsweise zentral im Fahrzeug 1 vorgesehen. Die Verarbeitungsvorrichtung 60 kann bevorzugt (begrenzt) verteilt im Fahrzeug 1 angeordnet sein und mehrere Komponenten aufweisen. Alternativ ist es auch möglich, dass die Verarbeitungsvorrichtung 60 räumlich zentral im Fahrzeug 1, zum Beispiel als ein einziges Bauteil, angeordnet ist. Die Komponenten der Kommunikationsvorrichtung 20 und/oder der Erfassungsvorrichtung 10 können vorzugsweise verteilt im Fahrzeug angeordnet sein, wobei die Kommunikationseinheiten 30 (und/oder die jeweiligen Kommunikationsschnittstellen) jeweils getrennt voneinander angeordnet und/oder ausgebildet sein können. Auch hier ist es alternativ denkbar, dass die Kommunikationsvorrichtung 20 und/oder die Erfassungsvorrichtung 10 als ein räumlich begrenztes Bauteil im Fahrzeug 1 und/oder räumlich begrenzt im Fahrzeug 1 angeordnet und/oder ausgebildet ist. Die Zugehörigkeit der Kommunikationseinheiten 30 zur Kommunikationsvorrichtung 20 entspricht somit vorzugsweise einer rein funktionellen (logischen) Zugehörigkeit.

Alternativ oder zusätzlich kann eine Abstandsermittlung durch eine Erfassungsauswerteeinheit 11 der Erfassungsvorrichtung 10 und/oder der Kommunikationsvorrichtung 20 durchgeführt werden. Weiter weist die Erfassungsauswerteeinheit 11 und/oder die Verarbeitungsvorrichtung 60 bspw. Elektronikkomponenten wie integrierte Schaltkreise und/oder Prozessoren auf, um die Abstandsermittlung und/oder eine Auswertung der Abstandsinformation durchzuführen. Zur Auswertung der Abstandsinformation und/oder zur Abstandsermittlung umfasst die Verarbeitungsvorrichtung 60 insbesondere eine Auswertevorrichtung 61. Damit die Abstandsinformation ausgewertet werden kann, muss sie vorzugsweise zunächst entschlüsselt werden. Hierzu ist die Verarbeitungsvorrichtung 60 elektrisch, insbesondere elektronisch, mit einer Entschlüsselungsvorrichtung 62 verbunden. Selbstverständlich kann die Auswertevorrichtung 61 optional auch selbst die Entschlüsselung durchführen, sodass keine Entschlüsselungsvorrichtung 62 vorgesehen sein muss. Ebenso ist es denkbar, dass die Verarbeitungsvorrichtung 60 mit einer Datenspeichereinheit 63 elektrisch verbunden ist, wobei in der Datenspeichereinheit 63 für die Verarbeitungsvorrichtung 60 und/oder die Auswertevorrichtung 61 lesbar eine digitale Schlüsselinformation zur Entschlüsselung gespeichert ist. Die digitale Schlüsselinformation ist zum Beispiel ein kryptographischer Schlüssel. Die Auswertevorrichtung 61 und/oder die Entschlüsselungsvorrichtung 62 und/oder die Datenspeichereinheit 63 der Verarbeitungsvorrichtung 60 können dabei bevorzugt auf einer gemeinsamen Platine angeordnet und/oder elektrisch miteinander verbunden sein, wie bspw. aus Figur 9 schematisch hervorgeht. Dabei ist die Datenspeichereinheit 63 nur optional als separates Bauteil vorgesehen, was durch eine gestrichelte Linie in Figur 9 veranschaulicht wird. Alternativ kann die Datenspeichereinheit 63 auch in der Auswertevorrichtung 61 und/oder in der Entschlüsselungsvorrichtung 62, bspw. als Flash-Speicher, integriert sein.

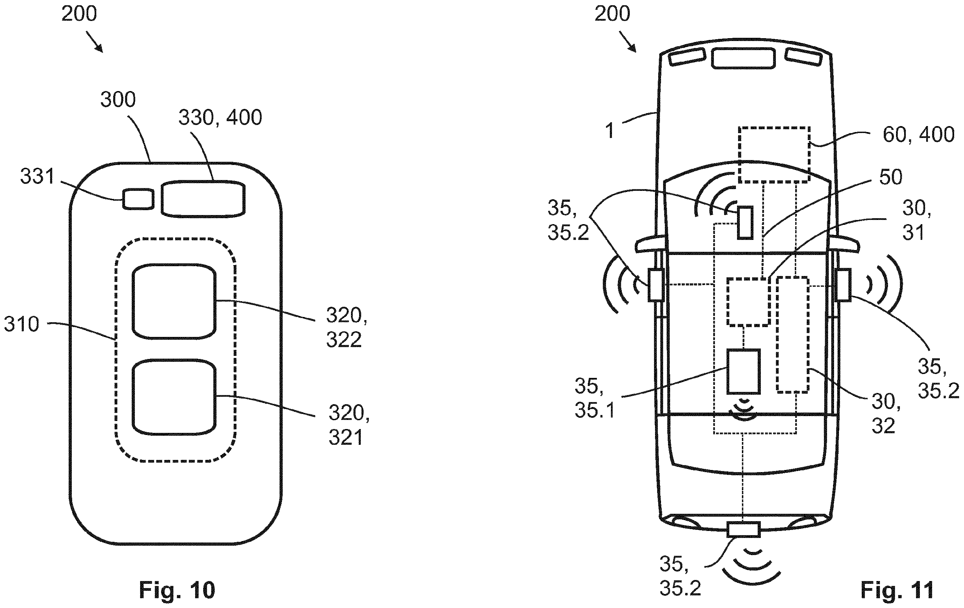

In Figur 10 ist ein schematischer Aufbau eines mobilen Identifikationsgebers 300 eines erfindungsgemäßen Sicherheitssystems 200 gezeigt. Der mobile Identifikationsgeber 300 umfasst dabei eine Sende-Empfangsvorrichtung 310, welche zur Kommunikation mit dem Fahrzeug 1, insbesondere mit der Kommunikationsvorrichtung 20, dient. Insbesondere weist die Sende-Empfangsvorrichtung 310 zumindest eine Sende-Empfangseinheit 320 auf, vorzugsweise eine erste Sende-Empfangseinheit 321 zur Durchführung einer ersten Kommunikation mit dem Fahrzeug 1 und eine zweite Sende-Empfangseinheit 322 zur Durchführung einer zweiten Kommunikation mit dem Fahrzeug 1. Selbstverständlich kann auch nur eine einzige (zum Beispiel erste) Sende-Empfangseinheit 320, 321 vorgesehen sein, sodass nur eine einzige (zum Beispiel erste) Kommunikation durchführbar ist. Die erste Sende-Empfangseinheit 321 ist bspw. zur Durchführung einer Ultrabreitbandkommunikation ausgeführt und/oder die zweite Sende-Empfangseinheit 322 ist bspw. zur Durchführung einer LF- und/oder HF-Kommunikation ausgeführt. Auf diese Weise können z. B. Kommunikationssignale S, insbesondere ein erstes Kommunikationssignal S1 und/oder ein zweites Kommunikationssignal S2, an die Kommunikationsvorrichtung 20 des Fahrzeugs 1 drahtlos übertragen werden. Die Übertragung kann bspw. verschlüsselt erfolgen, wobei hierzu eine Verschlüsselungseinheit 331 des Identifikationsgebers 300 vorgesehen und/oder elektrisch mit der Sende-Empfangsvorrichtung 310 (direkt oder indirekt) verbunden ist. Optional ist es denkbar, dass auch eine Abstandsermittlung durch den Identifikationsgeber 300 anhand des Kommunikationssignals S durchgeführt wird. Dazu wird bspw. eine Verarbeitungseinheit 330 als Abstandsermittlungsvorrichtung 400 genutzt.

Figur 11 zeigt eine Draufsicht auf ein Fahrzeug 1 welches ein erfindungsgemäßes Sicherheitssystem 200 aufweist. Das Sicherheitssystem 200 umfasst dabei mindestens eine Kommunikationsvorrichtung 20, welche zur Kommunikation mit einem Identifikationsgeber 300 dient. In Figur 11 sind dabei zwei verschiedene Kommunikationseinheiten 30 der Kommunikationsvorrichtung 20 gezeigt, wobei selbstverständlich auch nur eine einzige dieser Kommunikationseinheiten 30 vorgesehen sein kann. Um entsprechende Kommunikationssignale S durch die Kommunikationsvorrichtung 20 auszusenden, umfasst die Kommunikationsvorrichtung 20 und/oder die Kommunikationseinheit 30 zumindest ein Kommunikationsteil 35, welches bspw. als Antenne und/oder Satellit ausgeführt ist. So kann bspw. ein erstes Kommunikationsteil 35.1 an einem Dach des Fahrzeugs 1 angeordnet sein. Weiter ist es denkbar, dass auch weitere Kommunikationsteile 35, insbesondere ein zweites Kommunikationsteil 35.2, am Seitenbereich des Fahrzeugs 1 und/oder am Dach des Fahrzeugs 1 angeordnet sind. Auch ist es denkbar, dass neben dem ersten Kommunikationsteil 35.1 weitere erste Kommunikationsteile 35.1 am Fahrzeug 1 vorgesehen sind, welche jeweils zur ersten Kommunikation mit dem Identifikationsgeber 300 dienen. Hierzu ist das erste Kommunikationsteil 35.1 bzw. jedes erste Kommunikationsteil 35.1 elektrisch mit einer ersten Kommunikationseinheit 31 des Fahrzeugs 1 verbunden. Das zweite Kommunikationsteil 35.2 bzw. jedes zweite Kommunikationsteil 35.2 dient zur zweiten Kommunikation durch die zweite Kommunikationseinheit 32 und ist elektrisch mit der zweiten Kommunikationseinheit 32 des Fahrzeugs 1 verbunden. Die elektrische Verbindung des ersten Kommunikationsteils 35.1 mit der ersten Kommunikationseinheit 31 und/oder des zweiten Kommunikationsteils 35.2 mit der zweiten Kommunikationseinheit 32 erfolgt bspw. über elektrische Leitungen und/oder über ein Übertragungssystem 50, wobei insbesondere die über das Übertragungssystem 50 übertragenen Informationen verschlüsselt übertragen werden. Alternativ oder zusätzlich ist es möglich, dass die elektrische Verbindung zwischen der ersten Kommunikationseinheit 31 mit einer Verarbeitungsvorrichtung 60 und/oder die elektrische Verbindung der zweiten Kommunikationseinheit 32 mit der Verarbeitungsvorrichtung 60 über das Übertragungssystem 50 erfolgt. Auch hier können die Informationen, insbesondere die durch die erste Kommunikationseinheit 31 erfasste Abstandsinformation, verschlüsselt über das Übertragungssystem 50 an die Verarbeitungsvorrichtung 60 übertragen werden. Die Verarbeitungsvorrichtung 60 dient insbesondere als Abstandsermittlungsvorrichtung 400 zur (zusätzlichen) Bestimmung, Plausibilisierung und/oder Auswertung der Abstandsinformation. Durch die verschlüsselte Übertragung kann damit die Sicherheit der Abstandsermittlung und/oder der Auswertung der Abstandsinformation gewährleistet werden. Das erste Kommunikationsteil 35.1 und/oder das zweite Kommunikationsteil 35.2 sind bspw. als Antenne und/oder Sender und/oder Empfänger zur Kommunikation, insbesondere mittels eines UWB-Kommunikationsverfahren, ausgeführt. Bevorzugt ist dabei das erste Kommunikationsteil 35.1 und/oder das zweite Kommunikationsteil 35.2 asynchron (am Fahrzeug 1) angeordnet.

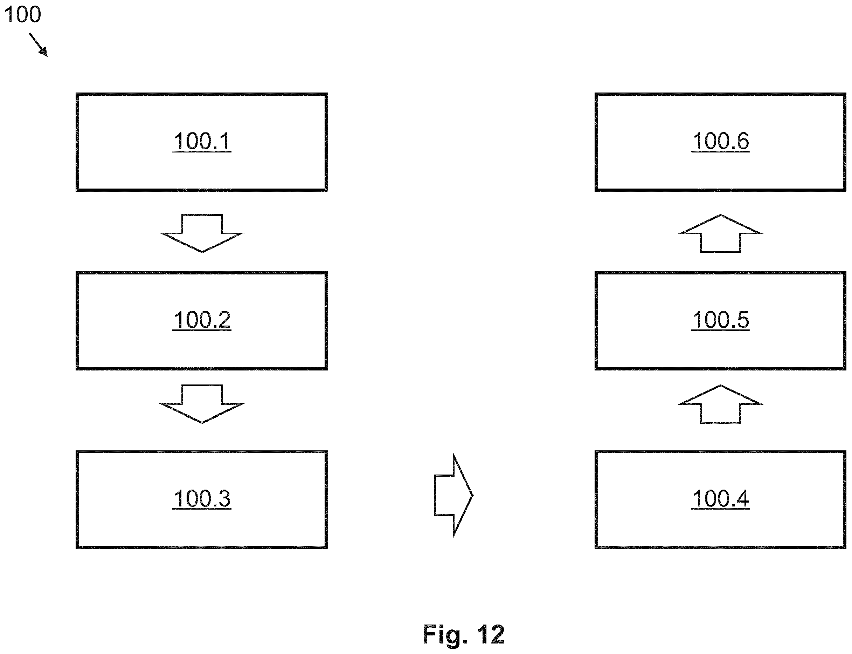

In Figur 12 ist schematisch ein erfindungsgemäßes Verfahren 100 visualisiert. Dabei wird zur Aktivierung mindestens einer Sicherheitsfunktion des Fahrzeugs 1 gemäß einem ersten Verfahrensschritt 100.1 eine Annäherung eines mobilen Identifikationsgebers 300 an das Fahrzeug 1 überwacht. Gemäß einem zweiten Verfahrensschritt 100.2 wird eine Abstandsermittlung dann initiiert, wenn die Annäherung detektiert wird. Gemäß einem dritten Verfahrensschritt 100.3 wird die Abstandsermittlung durchgeführt, wobei zumindest eine Abstandsinformation über einen Abstand des Identifikationsgebers 300 zum Fahrzeug 1 dadurch bestimmt wird, dass eine Kommunikation zwischen einer Sende-Empfangsvorrichtung 310 des Identifikationsgebers 300 und einer Kommunikationsvorrichtung 20 des Fahrzeugs 1 ausgewertet wird. Gemäß einem vierten Verfahrensschritt 100.4 wird die Abstandsinformation durch eine Verarbeitungsvorrichtung 60 des Fahrzeugs 1 ausgewertet, wodurch eine Lokalisierung des Identifikationsgebers 300 relativ zu mindestens einer Sicherheitszone Z erfolgt. Gemäß einem fünften Verfahrensschritt 100.5 wird eine Sicherheitsinformation für das Sicherheitssystem in Abhängigkeit von der Lokalisierung bestimmt. Gemäß einem sechsten Verfahrensschritt 100.6 kann die Sicherheitsinformation anschließend genutzt werden, um in Abhängigkeit von der Sicherheitsinformation die Sicherheitsfunktion des Fahrzeugs zu aktivieren. Hierzu kann bspw. auch ein Authentifizierungsverfahren durchgeführt werden.

Die voranstehende Erläuterung der Ausführungsformen beschreibt die vorliegende Erfindung ausschließlich im Rahmen von Beispielen.

### Bezuqszeichenliste

- 1: Fahrzeug
- 2: Annäherungssensor

- 10: Erfassungsvorrichtung
- 11: Erfassungsauswerteeinheit

- 20: Kommunikationsvorrichtung

- 30: Kommunikationseinheit
- 31: erste Kommunikationseinheit
- 31.1: Kommunikationsschnittstelle, Ultrabreitband-Schnittstelle
- 31.2: Kommunikationsschnittstelle, Bluetooth-Schnittstelle
- 32: zweite Kommunikationseinheit
- 32.1: Kommunikationsschnittstelle, LF-Schnittstelle
- 32.2: Kommunikationsschnittstelle, HF-Schnittstelle
- 35: Kommunikationsteil, Antenne
- 35.1: erstes Kommunikationsteil
- 35.2: zweites Kommunikationsteil

- 40: Verschlüsslungsvorrichtung

- 50: Übertragungssystem
- 51: Übertragungsstation

- 60: Verarbeitungsvorrichtung
- 61: Auswertevorrichtung
- 62: Entschlüsselungsvorrichtung
- 63: Datenspeichereinheit
- 100: Verfahren
- 100.1: erster Verfahrensschritt
- 100.2: zweiter Verfahrensschritt
- 100.3: dritter Verfahrensschritt
- 100.4: vierter Verfahrensschritt
- 100.5: fünfter Verfahrensschritt
- 100.6: sechster Verfahrensschritt

- 200: Sicherheitssystem

- 300: Identifikationsgeber
- 310: Sende-Empfangsvorrichtung

- 320: Sende-Empfangseinheit
- 321: erste Sende-Empfangseinheit
- 322: zweite Sende-Empfangseinheit
- 330: Verarbeitungseinheit
- 331: Verschlüsselungseinheit

- 400: Abstandsermittlungsvorrichtung

- A: Abstand
- K: Kommunikationsfeld
- S: Kommunikationssignal
- S1: erstes Kommunikationssignal einer ersten Kommunikation
- S2: zweites Kommunikationssignal einer zweiten Kommunikation
- Z: Sicherheitszone
- Z1: erste Sicherheitszone
- Z2: zweite Sicherheitszone
- Z3: dritte Sicherheitszone, Komfortzone

## Patentansprüche

1. Verfahren (100) für ein Sicherheitssystem (200) eines Fahrzeuges (1), insbesondere für eine schlüssellose Aktivierung mindestens einer Sicherheitsfunktion des Fahrzeuges (1), **gekennzeichnet durch die nachfolgenden Schritte:**
- Überwachen einer Annäherung eines mobilen Identifikationsgebers (300) an das Fahrzeug (1),
- Initiieren einer Abstandsermittlung, wenn die Annäherung detektiert wird,
- Durchführen der Abstandsermittlung, wobei zumindest eine Abstandsinformation über einen Abstand des Identifikationsgebers (300) zum Fahrzeug (1) dadurch bestimmt wird, dass eine Kommunikation zwischen einer Sende-Empfangsvorrichtung (310) des Identifikationsgebers (300) und einer Kommunikationsvorrichtung (20) des Fahrzeuges (1) ausgewertet wird,
- Auswerten der Abstandsinformation durch eine Verarbeitungsvorrichtung (60) des Fahrzeuges (1), wodurch eine Lokalisierung des Identifikationsgebers (300) relativ zu mindestens einer Sicherheitszone (Z) erfolgt,
wobei eine Sicherheitsinformation für das Sicherheitssystem (200) in Abhängigkeit von der Lokalisierung bestimmt wird, wobei
die Abstandsinformation dadurch bestimmt wird, dass eine erste Kommunikation zwischen einer ersten Sende-Empfangseinheit (321) der Sende-Empfangsvorrichtung (310) und einer ersten Kommunikationseinheit (31) der Kommunikationsvorrichtung (20) ausgewertet wird, wobei eine zweite Kommunikation zwischen einer zweiten Sende-Empfangseinheit (322) der Sende-Empfangsvorrichtung (310) und einer zweiten Kommunikationseinheit (32) der Kommunikationsvorrichtung (20) zur Überwachung der Annäherung und/oder Initiierung der Abstandsermittlung und/oder Authentifizierung genutzt wird.

2. Verfahren (100) nach Anspruch 1,
**dadurch gekennzeichnet,**
**dass** die Sicherheitsinformation in Abhängigkeit von der Lokalisierung und einer Authentifizierung des Identifikationsgebers (300) bestimmt wird, wobei zur Authentifizierung eine zweite Kommunikation zwischen einer zweiten Sende-Empfangseinheit (322) der Sende-Empfangsvorrichtung (310) und einer zweiten Kommunikationseinheit (32) der Kommunikationsvorrichtung (20) durchgeführt wird, insbesondere durch eine Übertragung einer Authentifizierungsinformation durch die zweite Kommunikation, bevorzugt vor und/oder nach der Abstandsermittlung, und/oder dass die, vorzugsweise erste, Kommunikation mittels eines breitbandigen Kommunikationsverfahrens, insbesondere Ultrabreitband, durchgeführt wird, und bevorzugt die zweite Kommunikation mittels einer LF- und/oder Bluetooth-, insbesondere Bluetooth Low Energy, und/oder HF-Kommunikation durchgeführt wird.

3. Verfahren (100) nach einem der vorhergehenden Ansprüche,
**dadurch gekennzeichnet,**
**dass** zur Überwachung der Annäherung und/oder zur Initiierung der Abstandsermittlung und/oder zur Abstandsermittlung und/oder zur Authentifizierung, insbesondere ausschließlich, ein breitbandiges Kommunikationsverfahren, vorzugsweise Ultrabreitband, genutzt wird,
und/oder dass die Überwachung der Annäherung und/oder die Initiierung der Abstandsermittlung durch Aussenden eines Initiierungssignals, bevorzugt eines LFund/oder HF- und/oder Bluetooth- und/oder Ultrabreitband-Initiierungssignals, erfolgt, wobei vorzugsweise das Aussenden zyklisch und/oder wiederholt erfolgt.

4. Verfahren (100) nach einem der vorhergehenden Ansprüche,
**dadurch gekennzeichnet,**
**dass** ein Aussenden eines Initiierungssignals zur Initiierung frühestens dann erfolgt, wenn eine Annäherung des Identifikationsgebers (300) detektiert wird, wobei das Aussenden vorzugsweise durch eine zweite Kommunikationseinheit (32) des Fahrzeugs (1) durchgeführt wird.

5. Verfahren (100) nach einem der vorhergehenden Ansprüche,
**dadurch gekennzeichnet,**
**dass** bei der initiierung der Abstandsermittlung und/oder nach einer erfolgreichen Authentifizierung und/oder Identifizierung des Identifikationsgebers (300) eine erste Kommunikationseinheit (31) der Kommunikationsvorrichtung (20) und/oder eine erste Sende-Empfangseinheit (321) des Identifikationsgebers (300) aktiviert wird, wobei hierzu insbesondere ein Energiesparzustand deaktiviert wird.

6. Verfahren (100) nach einem der vorhergehenden Ansprüche,
**dadurch gekennzeichnet,**
**dass** die Abstandsermittlung primär durch eine zweite Kommunikation erfolgt, und sekundär durch eine erste Kommunikation eine Bestimmung einer weiteren Abstandsinformation zur Plausibilisierung erfolgt, um insbesondere die Genauigkeit und/oder Auflösung und/oder Sicherheit der Lokalisierung zu verbessern.

7. Verfahren (100) nach einem der vorhergehenden Ansprüche,
**dadurch gekennzeichnet,**
**dass** die Lokalisierung des Identifikationsgebers (300) durch die, insbesondere erste, Kommunikation manuell zum Auffinden des identifikationsgebers (300) durch einen Bediener und/oder automatisch nach Durchführung der Abstandsermittlung initiiert und/oder durchgeführt wird.

8. Verfahren (100) nach einem der vorhergehenden Ansprüche,
**dadurch gekennzeichnet,**
**dass** zur Kommunikation eine erste Kommunikation, insbesondere auch für eine Authentifizierung und/oder Initiierung, dann genutzt wird, wenn Störeinflüsse auf eine zweite Kommunikation festgestellt werden, und andernfalls die Kommunikation, insbesondere für die Authentifizierung und/oder Initiierung, durch die zweite Kommunikation erfolgt,
und/oder dass nach einer vorbestimmten Zeitdauer, insbesondere nach einem Aussenden eines Abfragesignals, für eine erste Sende-Empfangseinheit (321) des Identifikationsgebers (300) und/oder für eine erste Kommunikationseinheit (31) der Kommunikationsvorrichtung (20) eine Abschaltung erfolgt und/oder ein Energiesparzustand aktiviert wird.

9. Verfahren (100) nach einem der vorhergehenden Ansprüche,
**dadurch gekennzeichnet,**
**dass** die Bestimmung der Abstandsinformation durch eine Verarbeitungseinheit (330) des Identifikationsgebers (300) durchgeführt wird und die Abstandsinformation von der Sende-Empfangsvorrichtung (310) des Identifikationsgebers (300) an eine Erfassungsvorrichtung (10), insbesondere die Kommunikationsvorrichtung (20), des Fahrzeugs (1), übertragen wird.

10. Verfahren (100) nach einem der vorhergehenden Ansprüche,
**dadurch gekennzeichnet,**
**dass** die Abstandsinformation zumindest teilweise anhand einer ersten Schlüsselinformation verschlüsselt wird, und anschließend über eine erste Kommunikation, bevorzugt an eine Erfassungsvorrichtung (10) des Fahrzeuges (1), übertragen wird, wobei vorzugsweise eine Übertragung einer Authentifizierungsinformation über eine zweite Kommunikation verschlüsselt und/oder fälschungssicher anhand einer zweiten Schlüsselinformation erfolgt.

11. Verfahren (100) nach einem der vorhergehenden Ansprüche,
**dadurch gekennzeichnet,**
**dass** die Abstandsinformation von einer Erfassungsvorrichtung (10), insbesondere der Kommunikationsvorrichtung (20), des Fahrzeuges (1) erfasst wird und nach dem Erfassen durch die Erfassungsvorrichtung (10) mittels einer Datenübertragung, insbesondere verschlüsselt und/oder fälschungssicher, über ein Übertragungssystem (50) an die Verarbeitungsvorrichtung (60) übertragen wird.

12. Verfahren (100) nach einem der vorhergehenden Ansprüche,
**dadurch gekennzeichnet,**
**dass** in Abhängigkeit von der Abstandsinformation zumindest eine Komfortfunktion des Fahrzeuges (1) aktiviert wird, insbesondere wenn der Identifikationsgeber (300) innerhalb einer Komfortzone (Z3) lokalisiert wird, wobei vorzugsweise die Komfortfunktion wenigstens eine der folgenden Funktionen umfasst:
- Einschalten einer Vorfeldbeleuchtung des Fahrzeuges (1),
- Einschalten einer Innenbeleuchtung des Fahrzeuges (1),
- Einschalten wenigstens eines Scheinwerfers des Fahrzeuges (1),
- Aktivieren einer Leuchtsequenz einer Fahrzeugbeleuchtung,
- Aktivieren einer akustischen Ausgabe am Fahrzeug (1),
- Einschalten einer Heizung des Fahrzeuges (1), insbesondere in Abhängigkeit von einer gemessenen Temperatur am Fahrzeug (1),
- Aktivieren einer Funktion einer elektronischen Vorrichtung des Fahrzeuges (1), insbesondere einer Navigationsfunktion, bevorzugt einer Erfassung von Verkehrsinformationen,
- Öffnen von Fahrzeugtüren.

13. Sicherheitssystem (200) eines Fahrzeuges (1), insbesondere für eine schlüssellose Aktivierung mindestens einer Sicherheitsfunktion des Fahrzeuges (1), umfassend:
- zumindest eine Kommunikationsvorrichtung (20) des Fahrzeuges (1) zur Kommunikation mit einer Sende-Empfangsvorrichtung (310) des Identifikationsgebers (300),
- zumindest eine Verarbeitungsvorrichtung (60) des Fahrzeuges (1),
wobei eine Annäherung des Identifikationsgebers (300) an das Fahrzeug (1) überwachbar ist, und
ein Initiieren einer Abstandsermittlung dann durchführbar ist, wenn die Annäherung detektiert wird, wobei
zur Abstandsermittlung zumindest eine Abstandsinformation über einen Abstand des Identifikationsgebers (300) zum Fahrzeug (1) dadurch bestimmbar ist, dass die Kommunikation ausgewertet wird, und
die Abstandsinformation durch die Verarbeitungsvorrichtung (60) auswertbar ist, wodurch eine Lokalisierung des identifikationsgebers (300) relativ zu mindestens einer Sicherheitszone (Z) erfolgt, wobei
eine Sicherheitsinformation für das Sicherheitssystem (200) in Abhängigkeit von der Lokalisierung bestimmbar ist wobei die Abstandsinformation dadurch bestimmbar ist, dass eine erste Kommunikation zwischen einer ersten Sende-Empfangseinheit (321) der Sende-Empfangsvorrichtung (310) und einer ersten Kommunikationseinheit (31) der Kommunikationsvorrichtung (20) ausgewertet wird, wobei eine zweite Kommunikation zwischen einer zweiten Sende-Empfangseinheit (322) der Sende-Empfangsvorrichtung (310) und einer zweiten Kommunikationseinheit (32) der Kommunikationsvorrichtung (20) zur Überwachung der Annäherung und/oder Initiierung der Abstandsermittlung und/oder Authentifizierung nutzbar ist.

14. Sicherheitssystem (200) eines Fahrzeuges (1) nach Anspruch 13,
**dadurch gekennzeichnet,**
**dass** das Sicherheitssystem (200) gemäß einem Verfahren (100) nach einem der vorhergehenden Ansprüche betreibbar ist.

15. Mobiler Identifikationsgeber (300) zur Authentifizierung an einem Sicherheitssystem (200) eines Fahrzeuges, wobei eine drahtlose Kommunikation zwischen dem Identifikationsgeber (300) und einer Kommunikationsvorrichtung (20) des Fahrzeuges (1) durchführbar ist,
**dadurch gekennzeichnet,**
**dass** eine erste Sende-Empfangseinheit (321) zur Durchführung einer ersten Kommunikation mit einer ersten Kommunikationseinheit (31) des Fahrzeuges (1) und eine zweite Sende-Empfangseinheit (322) zur Durchführung einer zweiten Kommunikation mit einer zweiten Kommunikationseinheit (32) des Fahrzeuges (1) vorgesehen sind,
und/oder dass der Identifikationsgeber (300) eine Verschlüsselungseinheit (331) umfasst, wodurch eine verschlüsselte Übertragung einer Abstandsinformation an das Fahrzeug (1) durchführbar ist,
wobei die Abstandsinformation dadurch bestimmbar ist, dass die erste Kommunikation zwischen der ersten Sende-Empfangseinheit (321) und einer ersten Kommunikationseinheit (31) ausgewertet wird, wobei eine zweite Kommunikation zwischen der zweiten Sende-Empfangseinheit (322) und der zweiten Kommunikationseinheit (32) zur Überwachung einer Annäherung und/oder Initiierung einer Abstandsermittlung und/oder der Authentifizierung nutzbar ist.

## Claims

1. Method (100) for a safety system (200) of a vehicle (1), in particular for a keyless activation of at least one safety function of the vehicle (1), **characterized by the following steps:**
- Monitoring an approach of a mobile identification transmitter (300) to the vehicle (1),
- Initiating a distance determination when the approach is detected,
- Carrying out the distance determination wherein at least one item of distance information relating to a distance between the identification transmitter (300) and the vehicle (1) is determined by evaluating a communication between a transceiver device (310) of the identification transmitter (300) and a communication device (20) of the vehicle (1),
- Evaluation of the distance information by a processing device (60) of the vehicle (1), whereby a localization of the identification transmitter (300) relative to at least one safety zone (Z) is effected,
wherein safety information for the safety system (200) is determined as a function of the localization, wherein
the distance information is determined by evaluating a first communication between a first transceiver unit (321) of the transceiver device (310) and a first communication unit (31) of the communication device (20), wherein a second communication between a second transceiver unit (322) of the transceiver device (310) and a second communication unit (32) of the communication device (20) is used for monitoring the approach and/or initiating the distance determination and/or authentication.

2. The method (100) according to claim 1,
**characterized in that**
the safety information is determined as a function of the localization and an authentication of the identification transmitter (300), wherein a second communication being carried out between a second transceiver unit (322) of the transceiver device (310) and a second communication unit (32) of the communication device (20) for the authentication, in particular by transmitting an authentication information by means of the second communication, preferably before and/or after the distance determination, and/or **in that** the, preferably first, communication is carried out by means of a broadband communication method, in particular ultra-broadband, and preferably the second communication is carried out by means of an LF and/or Bluetooth, in particular Bluetooth Low Energy, and/or HF communication.

3. Method (100) according to any one of the preceding claims,
**characterized in that**
a broadband communication method, preferably ultra-wideband, is used, in particular exclusively, for monitoring the approach and/or for initiating the distance determination and/or for distance determination and/or for authentication,
and/or **in that** the monitoring of the approach and/or the initiation of the distance determination is carried out by transmitting an initiation signal, preferably an LF and/or HF and/or Bluetooth and/or ultra-wideband initiation signal, the transmission preferably taking place cyclically and/or repeatedly.

4. Method (100) according to any one of the preceding claims,
**characterized in that**
transmission of an initiation signal for initiation takes place at the earliest when an approach of the identification transmitter (300) is detected, the transmission preferably being carried out by a second communication unit (32) of the vehicle (1).

5. Method (100) according to any one of the preceding claims,
**characterized in that**
a first communication unit (31) of the communication device (20) and/or a first transceiver unit (321) of the identification transmitter (300) is activated during the initiation of the distance determination and/or after a successful authentication and/or identification of the identification transmitter (300), in particular with a power saving state being deactivated for this purpose.

6. Method (100) according to any one of the preceding claims,
**characterized in that**
the distance determination is carried out primarily by a second communication, and secondarily by a first communication a determination of further distance information for plausibility checking is carried out, in particular in order to improve the accuracy and/or resolution and/or security of the localization.

7. Method (100) according to any one of the preceding claims,
**characterized in that**
the localization of the identification transmitter (300) by the, in particular first, communication is initiated and/or carried out manually for locating the identification transmitter (300) by an operator and/or automatically after carrying out the distance determination.

8. Method (100) according to any one of the preceding claims,
**characterized in that**
a first communication is used for communication, in particular also for authentication and/or initiation, if interference is detected on a second communication, and otherwise the communication, in particular for authentication and/or initiation, is carried out by the second communication,
and/or **in that**, after a predetermined period of time, in particular after an interrogation signal has been transmitted, a switch-off takes place for a first transceiver unit (321) of the identification transmitter (300) and/or for a first communication unit (31) of the communication device (20) and/or an energy-saving state is activated.

9. Method (100) according to any one of the preceding claims,
**characterized in that**
the determination of the distance information is carried out by a processing unit (330) of the identification transmitter (300) and the distance information is transmitted from the transceiver device (310) of the identification transmitter (300) to a detection device (10), in particular the communication device (20), of the vehicle (1).

10. Method (100) according to any one of the preceding claims,
**characterized in that**
the distance information is at least partially encrypted using first key information, and is then transmitted via a first communication, preferably to a detection device (10) of the vehicle (1), with authentication information preferably being transmitted via a second communication in an encrypted and/or forgery-proof manner using second key information.

11. Method (100) according to any one of the preceding claims,
**characterized in that**
the distance information is detected by a detection device (10), in particular the communication device (20), of the vehicle (1) and, after detection by the detection device (10), is transmitted to the processing device (60) by means of a data transmission, in particular encrypted and/or forgery-proof, via a transmission system (50).

12. Method (100) according to anyone of the preceding claims,
**characterized in that**
at least one comfort function of the vehicle (1) is activated as a function of the distance information, in particular when the identification transmitter (300) is located within a comfort zone (Z3), the comfort function preferably comprising at least one of the following functions:
- Switching on apron lighting of the vehicle (1),
- Switching on an interior light of the vehicle (1),
- Switching on at least one headlamp of the vehicle (1),
- Activating a light sequence of a vehicle lighting,
- Activating an acoustic output on the vehicle (1),
- Switching on a heating system of the vehicle (1), in particular as a function of a measured temperature on the vehicle (1),
- Activating a function of an electronic device of the vehicle (1), in particular a navigation function, preferably a traffic information acquisition function,
- Opening vehicle doors.

13. Safety system (200) of a vehicle (1), in particular for a keyless activation of at least one safety function of the vehicle (1), comprising:
- at least one communication device (20) of the vehicle (1) for communicating with a transceiver device (310) of an identification transmitter (300),
- at least one processing device (60) of the vehicle (1),
wherein an approach of the identification transmitter (300) to the vehicle (1) can be monitored, and an initiation of a distance determination can be carried out when the approach is detected, wherein for the distance determination at least one piece of distance information about a distance of the identification transmitter (300) to the vehicle (1) can be determined by evaluating the communication, and
the distance information is evaluable by the processing device (60), whereby a localization of the identification transmitter (300) relative to at least one safety zone (Z) is effected, wherein
a safety information for the safety system (200) can be determined as a function of the localization, wherein the distance information can be determined by evaluating a first communication between a first transceiver unit (321) of the transceiver device (310) and a first communication unit (31) of the communication device (20), wherein a second communication between a second transceiver unit (322) of the transceiver device (310) and a second communication unit (32) of the communication device (20) can be used for monitoring the approach and/or initiating the distance determination and/or authentication.

14. Safety system (200) of a vehicle (1) according to claim 13,
**characterized in that**
the safety system (200) is operable according to a method (100) according to any one of the preceding claims.

15. Mobile identification transmitter (300) for authentication to a safety system (200) of a vehicle, wherein wireless communication between the identification transmitter (300) and a communication device (20) of the vehicle (1) can be performed,
**characterized in that**
a first transceiver unit (321) for performing a first communication with a first communication unit (31) of the vehicle (1) and a second transceiver unit (322) for performing a second communication with a second communication unit (32) of the vehicle (1) are provided,
and/or **in that** the identification transmitter (300) comprises an encryption unit (331), whereby encrypted transmission of distance information to the vehicle (1) is feasible, wherein the distance information can be determined by evaluating the first communication between the first transceiver unit (321) and a first communication unit (31), wherein a second communication between the second transceiver unit (322) and the second communication unit (32) can be used for monitoring an approach and/or initiating a distance determination and/or the authentication.

## Revendications

1. Procédé (100) pour un système de sécurité (200) d'un véhicule (1), en particulier pour une activation sans clé d'au moins une fonction de sécurité du véhicule (1), **caractérisé par les étapes suivantes** :
- Surveillance d'une approche d'un émetteur d'identification mobile (300) vers le véhicule (1),
- Déclenchement d'une détermination de distance lorsque l'approche est détectée,
- Exécution de la détermination de la distance où au moins un information de distance concernant une distance entre l'émetteur d'identification (300) et le véhicule (1) est déterminé en évaluant une communication entre un dispositif d'émission-réception (310) de l'émetteur d'identification (300) et un dispositif de communication (20) du véhicule (1),
- Exploitation de l'information de distance par un dispositif de traitement (60) du véhicule (1), ce qui permet de localiser l'émetteur d'identification (300) par rapport à au moins une zone de sécurité (Z),
dans lequel un information de sécurité pour le système de sécurité (200) est déterminée en fonction de la localisation, dans lequel
l'information de distance est déterminée en évaluant une première communication entre une première unité d'émission-réception (321) du dispositif d'émission-réception (310) et une première unité de communication (31) du dispositif de communication (20), dans lequel une deuxième communication entre une deuxième unité d'émission-réception (322) du dispositif d'émission-réception (310) et une deuxième unité de communication (32) du dispositif de communication (20) est utilisée pour surveiller l'approche et/ou initier la détermination de la distance et/ou l'authentification.

2. Procédé (100) selon la revendication 1,
**caractérisé en ce que**
l'information de sécurité est déterminée en fonction de la localisation et d'une authentification de l'émetteur d'identification (300), dans lequel, pour l'authentification, une deuxième communication est effectuée entre une deuxième unité d'émissionréception (322) du dispositif d'émission-réception (310) et une deuxième unité de communication (32) du dispositif de communication (20), en particulier par une transmission d'une information d'authentification par la deuxième communication, de préférence avant et/ou après la détermination de la distance,
et/ou que la communication, de préférence la première communication, est effectuée au moyen d'un procédé de communication à large bande, en particulier à ultra large bande, et de préférence la seconde communication est effectuée au moyen d'une communication LF et/ou Bluetooth, en particulier Bluetooth Low Energy, et/ou HF.

3. Procédé (100) selon l'une quelconque des revendications précédentes,
**caractérisé en ce que**
un procédé de communication à large bande, de préférence à bande ultra-large, est utilisé, en particulier exclusivement, pour surveiller l'approche et/ou pour initier la détermination de la distance et/ou pour la détermination de la distance et/ou pour l'authentification,
et/ou que la surveillance de l'approche et/ou le déclenchement de la détermination de la distance s'effectue par la transmission d'un signal de déclenchement, de préférence un signal de déclenchement LF et/ou HF et/ou Bluetooth et/ou à bande ultra-large, la transmission s'effectuant de préférence de manière cyclique et/ou répétée.

4. Procédé (100) selon l'une quelconque des revendications précédentes,
**caractérisé en ce que**
la transmission d'un signal d'initiation pour le déclenchement a lieu au plus tôt lorsqu'une approche de l'émetteur d'identification (300) est détectée, la transmission étant de préférence effectuée par une deuxième unité de communication (32) du véhicule (1).

5. Procédé (100) selon l'une quelconque des revendications précédentes,
**caractérisé en ce que**
une première unité de communication (31) du dispositif de communication (20) et/ou une première unité d'émission/réception (321) de l'émetteur d'identification (300) est activée pendant le lancement de la détermination de la distance et/ou après une authentification et/ou une identification réussie de l'émetteur d'identification (300), en particulier un état d'économie d'énergie étant désactivé à cet effet.

6. Procédé (100) selon l'une quelconque des revendications précédentes,
**caractérisé en ce que**
la détermination de la distance est effectuée en premier lieu par une deuxième communication, et en second lieu, une détermination d'autres informations de distance pour le contrôle de plausibilité est effectuée par une première communication, en particulier pour améliorer la précision et/ou la résolution et/ou la sécurité de la localisation.

7. Procédé (100) selon l'une quelconque des revendications précédentes,
**caractérisé en ce que**
la localisation de l'émetteur d'identification (300) par la communication, en particulier la première, est initiée et/ou effectuée manuellement pour localiser l'émetteur d'identification (300) par un opérateur et/ou automatiquement après avoir effectué la détermination de la distance.

8. Procédé (100) selon l'une quelconque des revendications précédentes,
**caractérisé en ce que**
une première communication est utilisée pour la communication, en particulier également pour l'authentification et/ou l'initiation, si une interférence est détectée sur une deuxième communication, et sinon la communication, en particulier pour l'authentification et/ou l'initiation, a lieu par le biais de la deuxième communication,
et/ou **en ce que**, après une période de temps prédéterminée, en particulier après qu'un signal d'interrogation a été transmis, une mise hors service a lieu et/ou un état d'économie d'énergie est activé pour une première unité d'émission/réception (321) de l'émetteur d'identification (300) et/ou pour une première unité de communication (31) du dispositif de communication (20).

9. Procédé (100) selon l'une quelconque des revendications précédentes,
**caractérisé en ce que**
la détermination de l'information de distance est effectuée par une unité de traitement (330) de l'émetteur d'identification (300) et l'information de distance est transmise du dispositif d'émission-réception (310) de l'émetteur d'identification (300) à un dispositif de détection (10), en particulier le dispositif de communication (20), du véhicule (1).

10. Procédé (100) selon l'une quelconque des revendications précédentes,
**caractérisé en ce que**
l'information de distance est au moins partiellement cryptée à l'aide d'une première information de clé et est ensuite transmise via une première communication, de préférence à un dispositif de détection (10) du véhicule (1), l'information d'authentification étant de préférence transmise via une deuxième communication de manière cryptée et/ou infalsifiable à l'aide d'une deuxième information de clé.

11. Procédé (100) selon l'une quelconque des revendications précédentes,
**caractérisé en ce que**
l'information de distance est détectée par un dispositif de détection (10), en particulier le dispositif de communication (20), du véhicule (1) et, après la détection par le dispositif de détection (10), est transmise au dispositif de traitement (60) au moyen d'une transmission de données, en particulier cryptée et/ou infalsifiable, par l'intermédiaire d'un système de transmission (50).

12. Procédé (100) selon l'une quelconque des revendications précédentes,
**caractérisé en ce que**
au moins une fonction de confort du véhicule (1) est activée en fonction de l'information de distance, en particulier si l'émetteur d'identification (300) se trouve à l'intérieur d'une zone de confort (Z3), la fonction de confort comprenant de préférence au moins une des fonctions suivantes :
- Mise en marche de l'éclairage du tablier du véhicule (1),
- Allumer une lumière intérieure du véhicule (1),
- Allumer au moins un phare du véhicule (1),
- Activation d'une séquence d'éclairage d'un véhicule,
- Activez une sortie acoustique sur le véhicule (1),
- Mise en marche d'un chauffage du véhicule (1), notamment en fonction d'une température mesurée sur le véhicule (1),
- Activation d'une fonction d'un dispositif électronique du véhicule (1), en particulier une fonction de navigation, de préférence une détection d'informations sur le trafic,
- Ouverture des portes du véhicule.

13. Système de sécurité (200) d'un véhicule (1), en particulier pour une activation sans clé d'au moins une fonction de sécurité du véhicule (1), comprenant :
- au moins un dispositif de communication (20) du véhicule (1) pour communiquer avec un dispositif d'émission-réception (310) de l'émetteur d'identification (300),
- au moins un dispositif de traitement (60) du véhicule (1),
où une approche de l'émetteur d'identification (300) vers le véhicule (1) peut être surveillée, et un déclenchement d'une détermination de la distance peut être effectué lorsque l'approche est détectée, dans lequel, pour la détermination de la distance, au moins une information de distance concernant une distance de l'émetteur d'identification (300) par rapport au véhicule (1) peut être déterminée par la communication évaluée, et l'information de distance peut être évaluée par le dispositif de traitement (60), ce qui permet de localiser l'émetteur d'identification (300) par rapport à au moins une zone de sécurité (Z), dans laquelle
une information de sécurité pour le système de sécurité (200) peut être déterminée en fonction de la localisation, l'information de distance pouvant être déterminée en évaluant une première communication entre une première unité d'émission-réception (321) du dispositif d'émission-réception (310) et une première unité de communication (31) du dispositif de communication (20), dans lequel une seconde communication entre une seconde unité d'émission-réception (322) du dispositif d'émission-réception (310) et une seconde unité de communication (32) du dispositif de communication (20) peut être utilisée pour surveiller l'approche et/ou initier la détermination de distance et/ou l'authentification.

14. Système de sécurité (200) d'un véhicule (1) selon la revendication 13,
**caractérisé en ce que**
le système de sécurité (200) est utilisable selon un procédé (100) selon l'une des revendications précédentes.

15. Emetteur d'identification mobile (300) pour l'authentification à un système de sécurité (200) d'un véhicule, dans lequel une communication sans fil entre l'émetteur d'identification (300) et un dispositif de communication (20) du véhicule (1) est possible, **caractérisé en ce que**
une première unité d'émission-réception (321) pour effectuer une première communication avec une première unité de communication (31) du véhicule (1) et une seconde unité d'émission-réception (322) pour effectuer une seconde communication avec une seconde unité de communication (32) du véhicule (1) sont prévues,
et/ou que le émetteur d'identification (300) comprend une unité de cryptage (331), ce qui permet une transmission cryptée des informations de distance au véhicule (1),
dans lequel l'information de distance peut être déterminée en évaluant la première communication entre la première unité d'émission-réception (321) et une première unité de communication (31), dans lequel une deuxième communication entre la deuxième unité d'émission-réception (322) et la deuxième unité de communication (32) peut être utilisée pour surveiller une approche et/ou initier une détermination de la distance et/ou l'authentification.
